# EUROPEAN PATENT APPLICATION

(11) **EP 4 625 557 A2**
(43) Date of publication of application: **01.10.2025**
(21) Application number: 25165247.5
(22) Date of filing: 21.03.2025
(51) Int. Cl.: H01M 8/04082, H01M 8/2475, H01M 8/249

(54) **FUEL CELL SYSTEM**

(30) Priority: 26.03.2024 JP 2024049574
(71) Applicant: Yanmar Holdings Co., Ltd., Osaka-shi, Osaka (JP)
(72) Inventor: MARUYAMA, Takehiro, Osaka-shi (JP); MATSUI, Shinichiro, Osaka-shi (JP); HIRAIWA, Takuya, Osaka-shi (JP); YUKIZANE, Fumiaki, Osaka-shi (JP); SHINAGAWA, Manabu, Osaka-shi (JP); TERAGUCHI, Naoki, Osaka-shi (JP); HANADA, Yuya, Osaka-shi (JP); KUBO, Takahiro, Osaka-shi (JP); BABA, Katsuhiro, Osaka-shi (JP)
(74) Representative: Sekiguchi, Kazuya

(57) **Abstract**

The risk of breakage of a housing when an explosion occurs in a module installation compartment is reduced, without excessively increasing the pressure capacity of the housing.

A fuel cell system includes: a housing having a module installation compartment in which a fuel cell module is installed; and a double wall portion with an inner wall and an outer wall. The housing has the outer wall. The module installation compartment has the inner wall. The inner wall has a pressure release part. When a pressure in the module installation compartment reaches a predetermined pressure lower than a pressure capacity of the outer wall, the pressure release part releases the pressure.

## Description

### TECHNICAL FIELD

The present invention relates to a fuel cell system.

### BACKGROUND ART

For example, Patent Document 1 discloses a fuel cell ship including a fuel cell system. The fuel cell system has a fuel cell. The fuel cell ship propels the hull by supplying electric power supplied from the fuel cell to a propulsion device. In the fuel cell ship, the fuel cell is installed in a fuel cell compartment.

### PRIOR ART DOCUMENT

### PATENT DOCUMENT

Patent Document 1: JP2022-185194 A

### SUMMARY OF INVENTION

### TECHNICAL PROBLEM

Depending on the competent authorities or certification bodies, an electric device (including a fuel cell module) installed on a fuel cell ship is, in principle, required to be explosion-proof from the viewpoint of safety. However, even when the electric device is not explosion-proof, a case where safety equivalent to an explosion-proof electric device is approved when a certain condition is satisfied is supposed. As the certain condition mentioned above, a condition under which a housing of the fuel cell system having the electric device has strength enough to withstand a potential explosion in the compartment where the electric device is installed is supposed, for example.

When a fuel cell module is not explosion-proof, a conceivable method to satisfy the certain condition mentioned above is to enhance strength (pressure capacity) of a housing by increasing the thickness of an outer wall constituting the housing, for example. However, this method has the problems of increase in housing weight and material costs, difficulties in processing the housing (outer wall), and the like. Therefore, it is necessary to reduce the risk of breakage of the housing during a potential explosion in the installation compartment, without excessively increasing the pressure capacity of the outer wall of the housing.

The present invention is made to solve the above problems, and an object thereof is to provide a fuel cell system capable of reducing the risk of breakage of a housing when an explosion occurs in an installation compartment in which a fuel cell module is installed by any possibility, without excessively increasing the pressure capacity of the housing.

### SOLUTION TO PROBLEM

A fuel cell system according to an aspect of the present invention includes a housing having a module installation compartment in which a fuel cell module is installed, the fuel cell system further including a double-wall structure portion with an inner wall and an outer wall, in which the housing has the outer wall, the module installation compartment has the inner wall, the inner wall has a pressure release part, and when a pressure in the module installation compartment reaches a predetermined pressure lower than a pressure capacity of the outer wall, the pressure release part releases the pressure.

According to the above configuration, the risk of breakage of the housing can be reduced when an explosion occurs in the module installation compartment by any possibility, without excessively increasing the pressure capacity of the housing.

### BRIEF DESCRIPTION OF DRAWINGS

FIG. 1 is a schematic perspective view illustrating an appearance of a fuel cell system according to one embodiment of the present invention;
FIG. 2 is a perspective view of a housing in a state in which a lid body of the fuel cell system illustrated in FIG. 1 is omitted;
FIG. 3 is a schematic view illustrating an internal configuration of the housing;
FIG. 4 is an explanatory view illustrating a state of a rupture plate, which is an example of a pressure release part, before and after rupture;
FIG. 5 is a perspective view illustrating an appearance of another fuel cell system;
FIG. 6 is a one-point perspective view of the fuel cell system of FIG. 5 as viewed obliquely from the front with a second compartment omitted;
FIG. 7 is a one-point perspective view schematically illustrating an internal configuration of the fuel cell system of FIG. 6;
FIG. 8 is an explanatory view schematically illustrating an example of an installation position of the pressure release part on a right side surface of a first compartment of the fuel cell system;
FIG. 9 is an explanatory view schematically illustrating a flow of ventilation air as viewed from the front side of the first compartment;
FIG. 10 is an explanatory view schematically illustrating an intake path as viewed from the left side surface side of the first compartment;
FIG. 11 is an explanatory view schematically illustrating an exhaust path as viewed from the right side surface side of the first compartment;
FIG. 12 is an explanatory view illustrating an arrangement of a hydrogen supply passage as viewed from the front side of the first compartment;
FIG. 13 is an explanatory view illustrating an arrangement of a vent passage as viewed from the front side of the first compartment;
FIG. 14 is a front view illustrating a still another configuration of the fuel cell system;
FIG. 15 is a right side view of the fuel cell system;
FIG. 16 is a front view schematically illustrating a configuration of the fuel cell system as viewed from the front with a second compartment omitted;
FIG. 17 is a left side view illustrating a still another configuration of the fuel cell system; and
FIG. 18 is a right side view of the fuel cell system.

### DESCRIPTION OF EMBODIMENTS

Embodiments of the present invention will be described with reference to drawings. In the drawings, the same reference numerals denote the same or equivalent parts, and the descriptions thereof will not be repeated when not particularly necessary.

### 1. Outline of fuel cell system

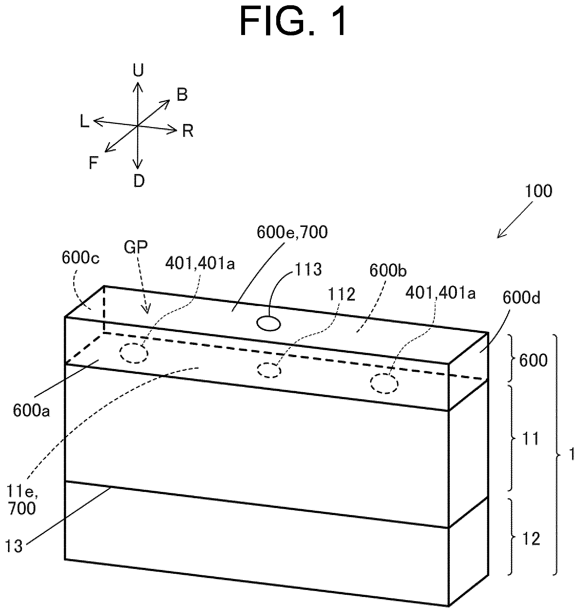

FIG. 1 is a schematic perspective view illustrating an appearance of a fuel cell system 100 according to an embodiment of the present invention. The fuel cell system 100 includes a housing 1. The housing 1 has a first compartment 11, a second compartment 12, and a lid body 600.

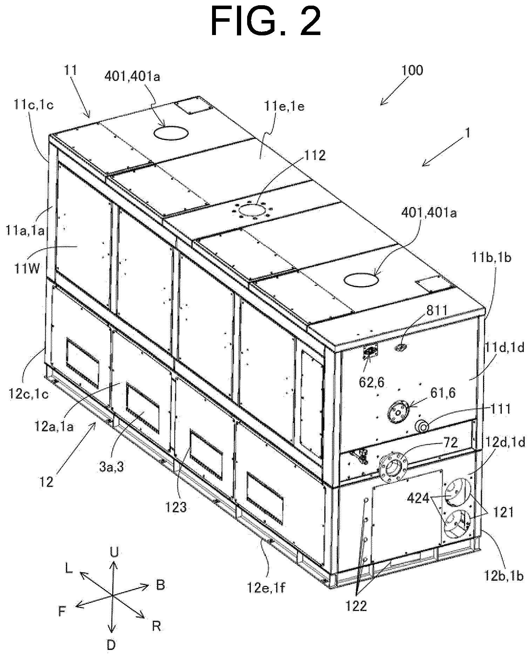

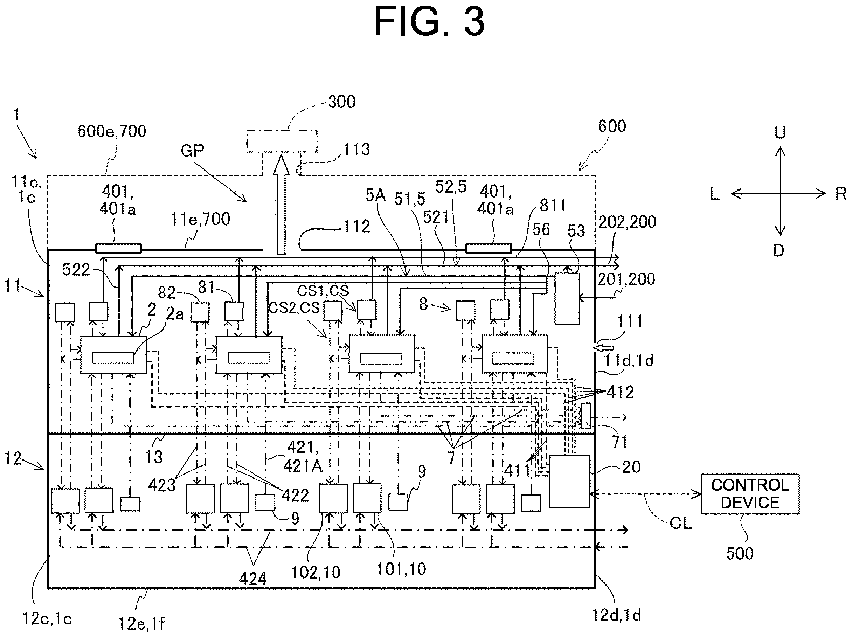

FIG. 2 is a perspective view of the housing 1 in a state in which the lid body 600 of FIG. 1 is omitted. FIG. 3 is a schematic view illustrating an internal configuration of the housing 1 of FIG. 2. In FIG. 3, arrows of solid lines, dash-dotted lines, and dash-dot-dot lines indicate fluid passages (a specific example thereof is piping) and directions in which a fluid flows through the fluid passages. In addition, in FIG. 3, dashed lines indicate wiring lines.

In the present embodiment, an example in which hydrogen is used as a fuel gas used in the fuel cell system 100 will be described, but the configuration and control of the present embodiment can also be applied to a system in which electric power is generated using a fuel gas other than hydrogen (for example, a gas containing methane as a main component).

As illustrated in FIG. 3, the housing 1 houses fuel cell modules 2. In other words, the fuel cell system 100 includes the fuel cell modules 2 in the housing 1. Specifically, the number of the fuel cell modules 2 housed in the housing 1 is four. However, the number of the fuel cell modules 2 housed in the housing 1 may be one or two or more other than four. In the present embodiment, the fuel cell module 2 is an electric device that is non-explosion-proof with respect to the fuel gas (hydrogen).

The fuel cell module 2 has a fuel cell stack 2a. The fuel cell module 2 is configured to also include a boost converter, a compressor for blowing air, and a pump for circulating a coolant to cool the fuel cell stack 2a.

The fuel cell stack 2a is composed of a plurality of stacked cells. Each cell has a solid polymer electrolyte membrane, an anode, a cathode, and a pair of separators. The solid polymer electrolyte membrane is sandwiched between the anode and the cathode. The anode is a negative electrode (fuel electrode). The anode includes an anode catalyst layer and a gas diffusion layer. The cathode is a positive electrode (air electrode). The cathode includes a cathode catalyst layer and a gas diffusion layer. The anode, the solid polymer electrolyte membrane, and the cathode constitute a membrane electrode assembly (MEA). The membrane electrode assembly is sandwiched by the pair of separators. Each separator has a plurality of grooves. Each groove of one separator forms a flow path for hydrogen gas. Each groove of the other separator forms a flow path for an oxidant gas (for example, air).

On the anode side, hydrogen is decomposed into hydrogen ions and electrons by a catalyst. The hydrogen ions pass through the solid polymer electrolyte membrane and move to the cathode side. On the other hand, the electrons move to the cathode side through an external circuit. Consequently, a current is generated (electric power is generated). On the cathode side, oxygen included in the oxidant gas combines with electrons having flowed through the external circuit and hydrogen ions having passed through the solid polymer electrolyte membrane to generate water. The generated water is included in exhaust gas and released to the outside of the fuel cell system 100. The electric power generated by the fuel cell stack 2a is boosted by the boost converter and taken out of the fuel cell system 100. Hydrogen discharged from the fuel cell module 2 is sent to a common vent passage 521 via an individual vent passage 522 of a vent passage 52.

As illustrated in FIG. 2, the fuel cell system 100 includes a salt removal device 3. The salt removal device 3 has a salt removal filter 3a. The salt removal filter 3a is provided in a window portion 123 of a second compartment front wall 12a (described later) of the housing 1. Air from which salts have been removed by the salt removal filter 3a is taken into the housing 1 of the fuel cell system 100. Consequently, salt damage is suppressed in the housing 1. The air taken into the housing 1 is sent to the fuel cell module 2 via an air intake part 9 (see FIG. 3) described later, and is used to generate electric power in the fuel cell stack 2a.

The window portion 123 is an outside air intake port for taking air (outside air) outside the housing 1 into the housing 1. That is, the housing 1 has the window portion 123 as an outside air intake port.

The housing 1 included in the fuel cell system 100 has, for example, a rectangular parallelepiped shape. For convenience of description below, in the description of the fuel cell system 100, directions are defined as follows. A direction perpendicular to a horizontal floor surface on which the fuel cell system 100 is disposed is defined as a top-bottom direction, and the top and the bottom are defined with the side on which the fuel cell system 100 is disposed with respect to the floor surface taken as the top. The front and the rear are defined such that the side of the housing 1 on which the salt removal device 3 is disposed is taken as the front side, and the side opposite to the front side of the housing 1 is taken as the rear side. A direction perpendicular to the top-bottom direction and the front-rear direction is defined as a left-right direction, and the left and the right are defined such that, as viewed from the front toward the rear, the side that is to the left is taken as the left side, and the side that is to the right is taken as the right side. When the housing 1 is viewed from above in a plan view, the longitudinal direction of the housing 1 is the left-right direction, and the lateral direction is the front-rear direction. In the drawings, in each of the directions defined as described above, the front is denoted by "F," the rear is denoted by "B," the left is denoted by "L," the right is denoted by "R," the top is denoted by "U," and the bottom is denoted by "D." These directions are names used merely for explanation, and are not intended to limit the actual positional relationships and directions.

### 2. Detailed configuration of fuel cell system

### 2-1. Outline of compartments

As illustrated in FIG. 3, the housing 1 includes a first compartment 11, a second compartment 12, and a partition wall 13. The second compartment 12 is positioned adjacent to the first compartment 11. Specifically, the first compartment 11 and the second compartment 12 are arranged in the top-bottom direction. The first compartment 11 is disposed above the second compartment 12. The configuration in which the first compartment 11 and the second compartment 12 are arranged in the top-bottom direction is merely an example, and other configurations may be adopted. For example, the first compartment and the second compartment may be configured to be arranged in the left-right direction.

The fuel cell module 2 is disposed in the first compartment 11. Accordingly, the first compartment 11 constitutes a module installation compartment in which the fuel cell module 2 is installed. That is, the fuel cell system 100 includes the housing 1 having the first compartment 11 as the module installation compartment. An auxiliary device relating to an action of the fuel cell module 2 is disposed in the second compartment 12. The auxiliary device will be described later.

The partition wall 13 is a dividing wall (compartment wall) partitioning the first compartment 11 and the second compartment 12. The partition wall 13 constitutes a bottom wall of the first compartment 11. The partition wall 13 constitutes a top wall of the second compartment 12.

In addition to the partition wall 13, the first compartment 11 is composed of a first compartment front wall 11a, a first compartment rear wall 11b, a first compartment left wall 11c, a first compartment right wall 11d, and a first compartment top wall 11e. The first compartment front wall 11a constitutes an upper portion of a front surface wall 1a of the housing 1. The first compartment rear wall 11b constitutes an upper portion of a rear surface wall 1b of the housing 1. The first compartment left wall 11c constitutes an upper portion of a left surface wall 1c of the housing 1. The first compartment right wall 11d constitutes an upper portion of a right surface wall 1d of the housing 1. The first compartment top wall 11e constitutes a top surface wall 1e of the housing 1.

In addition to the partition wall 13, the second compartment 12 is composed of a second compartment front wall 12a, a second compartment rear wall 12b, a second compartment left wall 12c, a second compartment right wall 12d, and a second compartment bottom wall 12e. The second compartment front wall 12a constitutes a lower portion of the front surface wall 1a of the housing 1. The second compartment rear wall 12b constitutes a lower portion of the rear surface wall 1b of the housing 1. The second compartment left wall 12c constitutes a lower portion of the left surface wall 1c of the housing 1. The second compartment right wall 12d constitutes a lower portion of the right surface wall 1d of the housing 1. The second compartment bottom wall 12e constitutes a bottom surface wall 1f of the housing 1.

The partition wall 13 separates the first compartment 11 and the second compartment 12 in an airtight manner. In the present embodiment, as will be described in detail later, the first compartment 11 is a compartment in which a fuel gas supply passage 5A is provided, and is a compartment in which leakage of hydrogen may occur. However, since the partition wall 13 that airtightly separates the two compartments (the first compartment 11 and the second compartment 12) is provided, hydrogen can be prevented from flowing into the second compartment 12 even when leakage of hydrogen occurs in the first compartment 11. Therefore, it is possible to eliminate the need to configure a device disposed in the second compartment 12 to have an explosion-proof structure against hydrogen. It is also possible to eliminate the need to provide the second compartment 12 with a function to vent leaked hydrogen.

The partition wall 13 has a through-hole (not shown) penetrating the partition wall 13 in the top-bottom direction. The through-hole is provided, for example, to allow at least one of wiring or piping to pass therethrough. The wiring includes a power line and a signal line. The signal line includes a control line and a sensor line. The through-hole is sealed by a sealing structure. Consequently, airtightness is ensured. Accordingly, hydrogen can be prevented from flowing into the second compartment 12 through the through-hole even when leakage of hydrogen occurs in the first compartment 11, for example.

### 2-2. Details of first compartment

As illustrated in FIG. 3, a hydrogen flow passage 5 is disposed in the first compartment 11. In the other words, the fuel cell system 100 includes the hydrogen flow passage 5 disposed in the housing 1. Specifically, the hydrogen flow passage 5 includes a hydrogen supply passage 51 that supplies hydrogen to the fuel cell module 2. The hydrogen supply passage 51 constitutes the fuel gas supply passage 5A that supplies hydrogen as the fuel gas to the fuel cell stack 2a. That is, the fuel cell system 100 includes the fuel gas supply passage 5A in the housing 1. The hydrogen flow passage 5 also includes the vent passage 52 that discharges hydrogen from the fuel cell module 2. The hydrogen flow passage 5 may be configured using piping.

The housing 1 has, on a wall different from the partition wall 13 among the walls 11a to 11e and 13 constituting the first compartment 11, a connection part 6 (see FIG. 2) that connects the hydrogen flow passage 5 to an external hydrogen flow passage 200 disposed outside the housing 1. The connection part 6 may be a connection site itself for connecting the hydrogen flow passage 5 and the external hydrogen flow passage 200, or may be a device for realizing the connection therebetween. In the present embodiment, the connection part 6 is an opening that exposes or places, outside the housing 1, an end portion of the hydrogen flow passage 5 disposed in the first compartment 11. The opening can be used to connect the hydrogen flow passage 5 to the external hydrogen flow passage 200. Specifically, the connection is a connection between pipes.

In the present embodiment, the connection part 6 is provided on the first compartment right wall 11d. However, the connection part 6 may be provided on a wall constituting the first compartment 11 other than the partition wall 13, such as the first compartment left wall 11c. When the connection part 6 is provided on a wall other than the partition wall 13 constituting the first compartment 11, a configuration in which the hydrogen flow passage 5 is not disposed in the second compartment 12 can be achieved. That is, it is possible to eliminate the need to take measures against leakage of hydrogen in the second compartment 12. Consequently, measures against leakage of hydrogen in the fuel cell system 100 can be facilitated.

The external hydrogen flow passage 200 also includes an external hydrogen supply passage 201, which is a passage for supplying hydrogen, and an external vent passage 202, which is a passage for discharging hydrogen, similarly to the hydrogen flow passage 5 disposed inside the housing 1. Correspondingly, the connection part 6 also has a hydrogen supply connection part 61 for connecting the hydrogen supply passage 51 and the external hydrogen supply passage 201, and a vent connection part 62 for connecting the vent passage 52 and the external vent passage 202 (see FIG. 2). In the present embodiment, the hydrogen supply connection part 61 and the vent connection part 62 are provided on the same wall (first compartment right wall 11d) constituting the first compartment 11. However, this is merely an example, and the hydrogen supply connection part 61 and the vent connection part 62 may be provided on different walls constituting the first compartment 11.

In the present embodiment, a plurality of (for example, four) fuel cell modules 2 is disposed in the first compartment 11. The plurality of fuel cell modules 2 is disposed side by side in the left-right direction. Hydrogen that has entered the hydrogen supply passage 51 in the housing 1 from the external hydrogen supply passage 201 reaches a branch portion 56 that divides the hydrogen supply passage 51 into four branches via a valve device 53. In the branch portion 56, hydrogen is distributed to four hydrogen supply passages 51 provided exclusively for the respective fuel cell modules 2. Distributed hydrogen is supplied to each fuel cell module 2.

As can be seen from the above description, the number of hydrogen supply passages 51 in the first compartment 11 connected to the external hydrogen supply passage 201 using the connection part 6 is one. That is, in the present embodiment, the hydrogen supply passage 51 in the first compartment 11 is not provided for each of the plurality of fuel cell modules 2 at the position where the connection part 6 is provided, but is shared among the plurality of fuel cell modules 2. The number of connection parts 6 can be reduced by sharing the hydrogen supply passage 51 in this manner. Consequently, airtightness (sealability) of the first compartment 11 can be enhanced.

The valve device 53 includes a shut-off valve that shuts off the supply of hydrogen to the fuel cell module 2. Further, the valve device 53 includes a bleed valve that allows hydrogen to escape to the vent passage 52 when the supply of hydrogen to the fuel cell module 2 is shut off.

The vent passage 52 includes a common vent passage 521 shared among the plurality of fuel cell modules 2. Hydrogen discharged from each fuel cell module 2 is sent to the common vent passage 521 and discharged from the external vent passage 202 via the vent connection part 62. A separate vent passage may be provided for each fuel cell module 2 to separately discharge the hydrogen to the outside of the housing 1.

As illustrated in FIG. 1 to FIG. 3, an intake port 111 and an exhaust port 112 for ventilation are provided in the first compartment 11 as the module installation section. The intake port 111 may be provided on at least one wall among the walls 11a to 11e and 13 constituting the first compartment 11 excluding the partition wall 13. In the present embodiment, the intake port 111 is provided on the first compartment right wall 11d. The intake port 111 provided on the first compartment right wall 11d is a through-hole penetrating the wall in the left-right direction. Ventilation fluid is supplied into the first compartment 11 from the intake port 111. Piping for supplying the ventilation fluid is attached to the intake port 111. The ventilation fluid is, for example, air, but may be an inert gas such as nitrogen gas or argon gas.

The exhaust port 112 is provided on the first compartment top wall 11e (top surface wall 1e of the housing 1). The exhaust port 112 communicates with the inside of the lid body 600. The lid body 600 is provided with a ventilator connection part 113. The ventilator connection part 113 is an opening connected to a ventilator 300. The ventilator 300 is disposed on the downstream side of the ventilator connection part 113 in the flow of the ventilation fluid. The ventilator 300 may be provided on the housing 1 side (for example, inside the lid body 600), or may be provided on the ship side on which the housing 1 is installed. In any case, the fluid in the first compartment 11 is discharged to the outside of the first compartment 11 through the exhaust port 112 by driving the ventilator 300. Therefore, even when hydrogen leaks in the first compartment 11, hydrogen can be discharged to the outside of the housing 1 together with the ventilation fluid so that hydrogen does not leak into the second compartment 12.

The first compartment top wall 11e is provided with a pressure release part 401 in addition to the exhaust port 112. Details of the pressure release part 401 will be described later.

In addition, an exhaust passage 7 and a reserve tank 8 are disposed in the first compartment 11 (see FIG. 3). In FIG. 3, the exhaust passage 7 is indicated by a thin dash-dot-dot line.

The exhaust passage 7 is connected to the fuel cell module 2. Specifically, the exhaust passage 7 is an exhaust pipe. Exhaust gas of the fuel cell module 2 flows through the exhaust passage 7. The exhaust gas of the fuel cell module 2 includes water vapor generated during generation of electric power, oxygen and nitrogen supplied to the fuel cell module 2 but not used to generate electric power, and hydrogen purged and discharged, at appropriate timing, from an anode path of the fuel cell stack 2a.

In the present embodiment, separate exhaust passages 7 are respectively connected to the four fuel cell modules 2 disposed in the first compartment 11. That is, four exhaust passages 7 are disposed in the first compartment 11. The four exhaust passages 7 are coupled to an exhaust passage collecting part 71 disposed in the first compartment 11. The exhaust passage collecting part 71 is disposed in a right end portion of the first compartment 11. Exhaust gas in the four exhaust passages 7 is collected at the exhaust passage collecting part 71 and released outside the first compartment 11 through one terminal exhaust passage 72 (see FIG. 2).

As illustrated in FIG. 2, the distal end (right end) of the terminal exhaust passage 72 protrudes outside from the first compartment right wall 11d. An external exhaust passage (not shown) is connected to the distal end of the terminal exhaust passage 72, and exhaust gas in the fuel cell module 2 is released to a proper place.

The reserve tank 8 is included in a cooling system CS provided for the fuel cell module 2 (see FIG. 3). Specifically, the cooling system CS provided for the fuel cell module 2 includes a first cooling system CS1 and a second cooling system CS2. Therefore, the reserve tank 8 specifically includes a first reserve tank 81 included in the first cooling system CS1 and a second reserve tank 82 included in the second cooling system CS2.

The first cooling system CS1 cools the fuel cell stack 2a included in the fuel cell module 2. That is, the reserve tank 81 included in the first cooling system CS1 for cooling the fuel cell stack 2a included in the fuel cell module 2 is disposed in the first compartment 11. The first cooling system CS1 circulates a first coolant to cool the fuel cell stack 2a by driving a pump (not shown) included in the fuel cell module 2.

The first reserve tank 81 stores or discharges the first coolant, as needed basis. The pump may or may not be included in the fuel cell module 2. That is, the pump may be provided outside the fuel cell module 2.

The first reserve tank 81 is disposed above the fuel cell stack 2a. Consequently, even when the first coolant contains hydrogen due to a malfunction, hydrogen can be vented to a position higher than the fuel cell stack 2a. The first cooling system CS1 is provided for each fuel cell module 2. Therefore, four first reserve tanks 81 are disposed in the first compartment 11 in the present embodiment.

As illustrated in FIG. 3, each first reserve tank 81 is connected to an air vent pipe 811. In addition, as illustrated in FIG. 2, an end portion of the air vent pipe 811 is exposed to the outside via an opening (not shown) on the first compartment right wall 11d. Even when the first coolant contains hydrogen due to a malfunction, hydrogen can be discharged to the outside of the first compartment 11 through the air vent pipe 811.

The second cooling system CS2 cools an electric device (in particular, a power electronic device) included in the fuel cell module 2. The reserve tank 82 included in the second cooling system CS2 for cooling the electric device included in the fuel cell module 2 is disposed in the first compartment 11. The second cooling system CS2 circulates a second coolant to cool the electric device by driving a coolant pump (not shown) disposed outside the fuel cell module 2. The second reserve tank 82 stores or discharges the second coolant, as needed basis. The coolant pump may be included in the fuel cell module 2. That is, the coolant pump may be provided inside the fuel cell module 2.

The second cooling system CS2 is provided for each fuel cell module 2. Therefore, four second reserve tanks 82 are disposed in the first compartment 11 in the present embodiment.

### 2-3. Details of second compartment

As described above, the auxiliary device relating to an action of the fuel cell module 2 is disposed in the second compartment 12. The air intake part 9 illustrated in FIG. 3, a heat exchanger 10, and a power distribution panel 20 are included in the auxiliary device.

The air intake part 9 takes in air to be supplied to the air electrode included in the fuel cell stack 2a. In the present embodiment, the air intake part 9 is disposed in the second compartment 12. That is, the air intake part 9 is disposed in a compartment in which leakage of hydrogen does not occur. This arrangement can prevent air including hydrogen from being taken in through the air intake part 9. Accordingly, air including hydrogen can be prevented from being supplied to the air electrode of the fuel cell stack.

Specifically, in the second compartment 12, the same number of air intake parts 9 as the plurality of fuel cell modules 2 disposed in the first compartment 11 are disposed. Since the air intake part 9 is provided for each fuel cell module 2, when a malfunction occurs in any of the plurality of fuel cell modules 2, it is possible to continuously run a fuel cell module 2 in which no malfunction occurs without stopping all of the fuel cell modules 2.

Specifically, the air intake part 9 is configured to include a filter. An air pipe 421 through which air flows is connected to the air intake part 9. The air intake part 9 and the air pipe 421 constitute a cathode air system 421A. The air pipe 421 is disposed across the first compartment 11 and the second compartment 12 via the through-hole of the partition wall 13. Air taken in, through the air intake part 9, by an action of the compressor included in the fuel cell module 2 is supplied to the air electrode of the fuel cell stack 2a included in the fuel cell module 2.

The heat exchanger 10 constitutes the cooling system CS provided for the fuel cell module 2. As described above, the cooling system CS includes the first cooling system CS1 and the second cooling system CS2 in the present embodiment. Therefore, the heat exchanger 10 specifically includes a first heat exchanger 101 constituting the first cooling system CS1 and a second heat exchanger 102 constituting the second cooling system CS2. The first heat exchanger 101 and the second heat exchanger 102 are provided for each fuel cell module 2. That is, four first heat exchangers 101 and four second heat exchangers 102 are disposed in the second compartment 12.

The first heat exchanger 101 exchanges heat between the first coolant and a third coolant supplied from the outside of the housing 1.

The first coolant is sent from the fuel cell stack 2a to the first heat exchanger 101 and returned from the first heat exchanger 101 to the fuel cell stack 2a using a first coolant pipe 422, which connects the first heat exchanger 101 and a pump included in the fuel cell module 2. The first coolant pipe 422 is disposed across the first compartment 11 and the second compartment 12 via the through-hole of the partition wall 13.

The third coolant is supplied from the outside of the housing 1 to the first heat exchanger 101 and discharged from the first heat exchanger 101 to the outside of the housing 1 using a third coolant pipe 424 disposed in the second compartment 12. As illustrated in FIG. 2, a connection port 121 for connecting, to external piping, the third coolant pipe 424 for supplying and discharging the third coolant is provided on the second compartment right wall 12d. The third coolant is supplied to the third coolant pipe 424 using a device disposed outside the housing 1. The third coolant may be seawater, although it is not intended to be limited thereto.

The second heat exchanger 102 exchanges heat between the second coolant and the third coolant supplied from the outside of the housing 1. Equipment for supplying and discharging the third coolant is shared with the first heat exchanger 101.

The second coolant is sent from the electric device included in the fuel cell module 2 to the second heat exchanger 102 and returned from the second heat exchanger 102 to the electric device using the second coolant pipe 423, which connects the second heat exchanger 102 and a pump included in the fuel cell module 2. The second coolant pipe 423 is disposed across the first compartment 11 and the second compartment 12 via the through-hole of the partition wall 13.

The third coolant is supplied from the outside of the housing 1 to the second heat exchanger 102 and discharged from the second heat exchanger 102 to the outside of the housing 1 using the third coolant pipe 424 disposed in the second compartment 12.

The power distribution panel 20 is disposed in a right end portion of the second compartment 12. The second compartment right wall 12d is provided with an electric wire placement part 122 for placing an electric wire connected to the power distribution panel 20. Specifically, the electric wire placement part 122 is a part through which the electric wire is taken out from the inside of the housing 1 to the outside or inserted from the outside to the inside. In addition, the electric wire placement part 122 may be a part through which an electric wire inside the housing 1 and an external electric wire are connected. The electric wire placement part 122 may be composed of an opening through which an electric wire passes, a connector for connecting an electric wire, or the like.

The power distribution panel 20 includes various terminals and relays. The various terminals include, for example, a terminal connected to a power line 411 through which electric power generated by the fuel cell module 2 flows. The various terminals also include a terminal connected to a control line 412 for controlling the fuel cell module 2. The power line 411 and the control line 412 are disposed across the first compartment 11 and the second compartment 12 via the through-hole of the partition wall 13. In addition, the various terminals include a terminal connected to a sensor line connected to a sensor such as a pressure sensor or a temperature sensor. The various terminals also include a terminal or the like connected to a communication line CL communicating with a control device 500.

The control device 500 controls the operation of each part in the housing 1. That is, the fuel cell system 100 of the present embodiment includes the control device 500. The control device 500 is composed of, for example, a programable logic controller (PLC). In the present embodiment, the control device 500 is disposed outside the housing 1 and is communicably connected to the power distribution panel 20 of the housing 1 via the communication line CL. Consequently, each part in the housing 1 can be controlled via the power distribution panel 20. The control device 500 may be disposed in the housing 1 (for example, the power distribution panel 20) and may be remotely controlled from the outside to control each part of the housing 1.

### 2-4. Details of lid body

As illustrated in FIG. 1, the lid body 600 covers a part of the first compartment 11. Specifically, the lid body 600 is disposed above the first compartment 11 and covers the first compartment top wall 11e.

The lid body 600 has a lid body front wall 600a, a lid body rear wall 600b, a lid body left wall 600c, a lid body right wall 600d, and a lid body top wall 600e. The lid body front wall 600a, the lid body rear wall 600b, the lid body left wall 600c, and the lid body right wall 600d are coupled to the front, rear, left, and right end sides of the lid body top wall 600e, respectively, and hang downward. Lower end portions of the lid body front wall 600a, the lid body rear wall 600b, the lid body left wall 600c, and the lid body right wall 600d are in contact with the first compartment top wall 11e of the first compartment 11. As a result, the lid body top wall 600e is located above the first compartment top wall 11e, and a gap GP is formed between the lid body top wall 600e and the first compartment top wall 11e. The connection between the lid body 600 and the first compartment top wall 11e is achieved by, for example, welding, but may be achieved by fastening using a fastening member such as a bolt.

The fuel cell system 100 of the present embodiment includes a double wall structure in which the first compartment top wall 11e is an inner wall, the lid body top wall 600e is an outer wall, and a gap GP is provided between the inner wall and the outer wall. The above-described double wall structure is referred to as a double wall portion 700. In this case, the fuel cell system 100 of the present embodiment can be expressed as follows. That is, the fuel cell system 100 includes the double wall portion 700 having the inner wall and the outer wall (disposed via the gap GP). The double wall portion 700 has a first compartment top wall 11e as the inner wall and a lid body top wall 600e as the outer wall. In the fuel cell system 100, the housing 1 has the outer wall (lid body top wall 600e), and the module installation compartment (first compartment 11) has the inner wall (first compartment top wall 11e).

### 2-5. Pressure release part

In the present embodiment, the pressure release part 401 is provided on the first compartment top wall 11e. That is, the first compartment top wall 11e as the inner wall has the pressure release part 401. When the pressure in the first compartment 11 as the module installation compartment reaches a predetermined pressure lower than the pressure capacity of the lid body top wall 600e serving as the outer wall, the pressure release part 401 releases the pressure. For example, when the designed pressure capacity of the lid body top wall 600e is 0.2 MPaG, the pressure release part 401 releases the pressure when the pressure in the first compartment 11 reaches 0.1 MPaG as the predetermined pressure. "G" in the description above indicates a gauge pressure based on atmospheric pressure (0.101325 MPa in absolute pressure) (the same applies hereinafter).

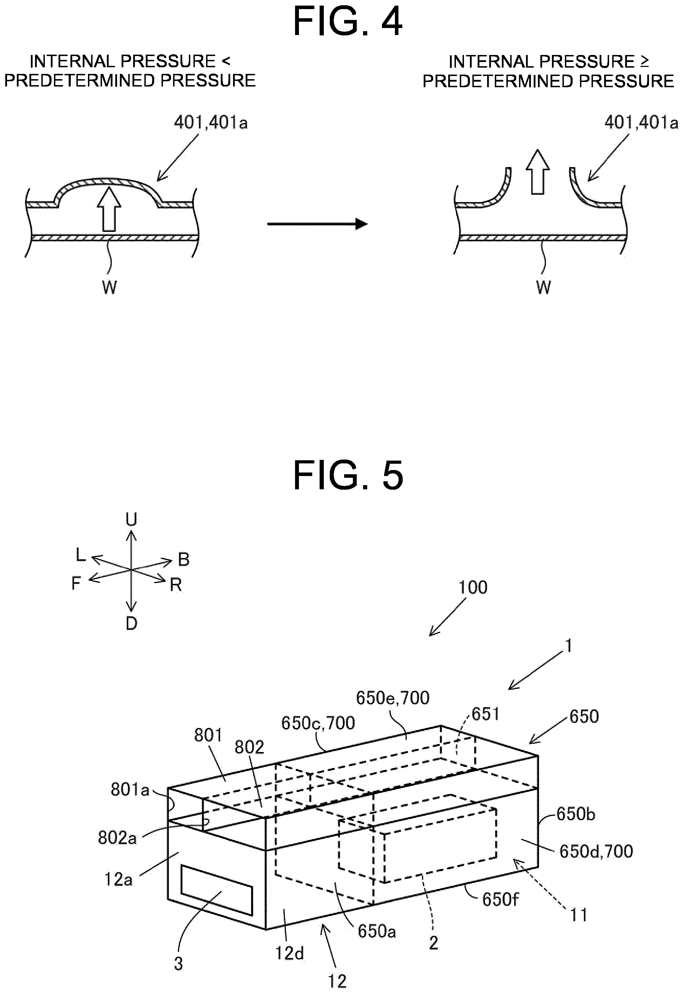

The pressure release part 401 is composed of, for example, a rupture plate 401a illustrated in FIG. 4. The rupture plate 401a releases the internal pressure by rupturing itself when the pressure (internal pressure) in the space between a wall portion W and the rupture plate 401a reaches a predetermined pressure. Such a rupture plate 401a is also referred to as a rupture disk. The operating pressure (the predetermined pressure) at which the rupture plate 401a ruptures can be set by appropriately selecting the material, shape, size, thickness, and the like of the rupture plate 401a.

The space between the wall portion W and the rupture plate 401a corresponds to the space in the first compartment 11.

In FIG. 1, as an example, two pressure release parts 401 are disposed on the first compartment top wall 11e. The number of the pressure release parts 401 provided is not particularly limited, and may be one or three or more. The installation position of the pressure release part 401 on the first compartment top wall 11e is also not particularly limited. Therefore, the pressure release parts 401 (four in total) may be provided above each of the fuel cell modules 2 so as to correspond to the individual fuel cell modules 2 in the first compartment 11, for example. Further, as a method of installing the pressure release part 401 on the inner wall, for example, various methods such as fastening a flange around the pressure release part 401 (rupture plate 401a) to the inner wall with a fastening member such as a bolt can be adopted.

If hydrogen leaks in the first compartment 11 and an explosion occurs by any possibility, the pressure in the first compartment 11 increases. Here, when a pressure exceeding the pressure capacity of the outer wall (the lid body top wall 600e) is applied to the outer wall, the outer wall breaks. In the present embodiment, at the time when the pressure in the first compartment 11 increases and reaches a predetermined pressure lower than the pressure capacity of the outer wall, the pressure release part 401 releases the pressure to the gap GP. The maximum pressure applied to the outer wall can be made lower than the pressure capacity of the outer wall by such pressure release. Therefore, it is possible to reduce the risk of breakage of the housing 1 (outer wall) when an explosion occurs in the first compartment 11 by any possibility, without taking any measures for excessively increasing the pressure capacity of the outer wall, for example, by excessively increasing the thickness of the outer wall. In particular, in the case where the pressure release part 401 is composed of the rupture plate 401a, the rupture plate 401a is first broken at a pressure lower than the pressure capacity at which the outer wall is broken, so that the risk of applying a pressure equal to or higher than the pressure capacity to the outer wall is reliably reduced.

As illustrated in FIG. 3, the first compartment 11 (in particular, the first compartment top wall 11e), which is the module installation compartment, has the exhaust port 112. The fluid discharged from the inside of the first compartment 11 through the exhaust port 112 passes through the gap GP between the inner wall (first compartment top wall 11e) and the outer wall (lid body top wall 600e) constituting the double wall portion 700, and is discharged to the outside via the ventilator connection part 113 and the ventilator 300. Therefore, even if hydrogen (leaked gas) leaked in the first compartment 11 is contained in the fluid, the leaked gas is discharged to the outside from the exhaust port 112 through the gap GP.

As in the present embodiment, in the configuration in which the double wall portion 700 is provided, the exhaust port 112 desirably communicates with the outside via the gap GP between the inner wall and the outer wall from the point of enabling the leaked gas generated in the first compartment 11 to be discharged to the outside through the exhaust port 112. In this case, since the gap GP of the double wall portion 700 is utilized as an exhaust flow path of leaked gas, it is not necessary to separately provide a dedicated exhaust flow path for guiding leaked gas to the outside.

The pressure release part 401 is not limited to the rupture plate 401a described above. For example, the pressure release part 401 may be composed of a pivoting member (hinge type) that opens and closes the opening. The pivoting member pivots when the pressure in the module installation compartment reaches the predetermined pressure to open the opening from a closed state, thereby releasing the pressure through the opening. Even in the case where the pressure release part 401 is composed of such a pivoting member, the same effect as that obtained when the rupture plate 401a is used can be obtained.

The number of lid bodies 600 is not limited to one and may be two or more. For example, a plurality of lid bodies 600 may be disposed side by side in the left-right direction on the first compartment top wall 11e of the first compartment 11. In this case, each lid body 600 may be disposed such that the outer wall (lid body top wall 600e) of each lid body 600 faces the inner wall (first compartment top wall 11e) having at least one pressure release part 401 via the gap GP.

In the lid body 600, wall portions other than the lid body top wall 600e, that is, the lid body front wall 600a, the lid body rear wall 600b, the lid body left wall 600c, and the lid body right wall 600d may extend downward so as to cover the first compartment front wall 11a, the first compartment rear wall 11b, the first compartment left wall 11c, and the first compartment right wall 11d of the first compartment 11, respectively. In this case, the double wall portion 700 can be composed of the first compartment front wall 11a of the first compartment 11 and the lid body front wall 600a of the lid body 600 respectively forming an inner wall and an outer wall. Similarly, the double wall portion 700 can be composed of the first compartment rear wall 11b and the lid body rear wall 600b respectively forming an inner wall and an outer wall. The double wall portion 700 can be composed of the first compartment left wall 11c and the lid body left wall 600c respectively forming an inner wall and an outer wall. The double wall portion 700 can be composed of the first compartment right wall 11d and the lid body right wall 600d respectively forming an inner wall and an outer wall. In this case, the pressure release part 401 can be disposed on an inner wall other than the first compartment top wall 11e of the first compartment 11. Therefore, the pressure release part 401 can be disposed on at least any one of the first compartment front wall 11a, the first compartment rear wall 11b, the first compartment left wall 11c, the first compartment right wall 11d, and the first compartment top wall 11e of the first compartment 11.

However, as illustrated in FIG. 2, since an inspection window 11W that is opened and closed at a time of inspection is provided on the first compartment front wall 11a, it is necessary to secure an installation space for the pressure release part 401 by, for example, reducing the size of the inspection window 11W. In addition, since the first compartment right wall 11d is provided with the above-described connection part 6 and the like, the installation space for the pressure release part 401 may be limited.

The first compartment left wall 11c is provided with a connection part similar to the connection part 6 in order to enable left-side connection in some cases, and the installation space for the pressure release part 401 may be limited also in this case.

As described above, when the pressure release part 401 is disposed on an inner wall other than the first compartment top wall 11e, it is necessary to set the arrangement position so as not to hinder the arrangement of other members.

### 3. Another configuration of fuel cell system

### 3-1. Outline of system

FIG. 5 is a perspective view illustrating an appearance of another fuel cell system 100. When the fuel cell system 100 illustrated in FIG. 1 and the like is referred to as a first fuel cell system, the fuel cell system 100 illustrated in FIG. 5 can be referred to as a second fuel cell system. Details of the fuel cell system 100 as the second fuel cell system will be described below. For convenience of description, in the second fuel cell system, members having the same functions as those of the first fuel cell system are denoted by the same reference numerals.

As illustrated in FIG. 5, the fuel cell system 100 as the second fuel cell system includes a housing 1. The housing 1 has a first compartment 11 as a module installation compartment. One fuel cell module 2 is installed in the first compartment 11. The first compartment 11 is installed on the rear side (the side opposite to the installation side of a salt removal device 3) of a second compartment 12. Since the configuration of the second compartment 12 is basically the same as that of the first fuel cell system, detailed descriptions thereof will be omitted here.

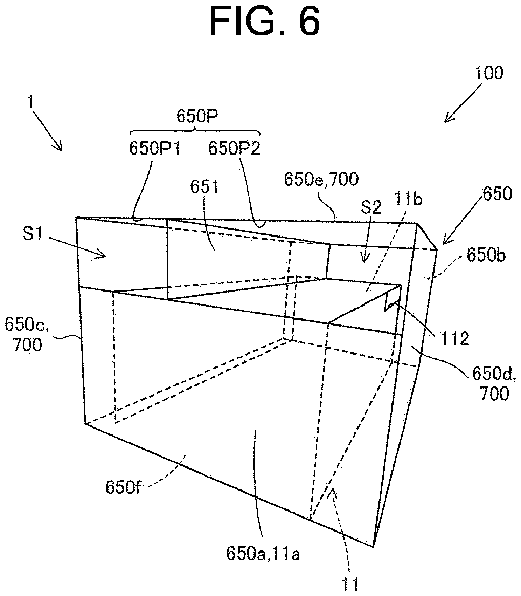

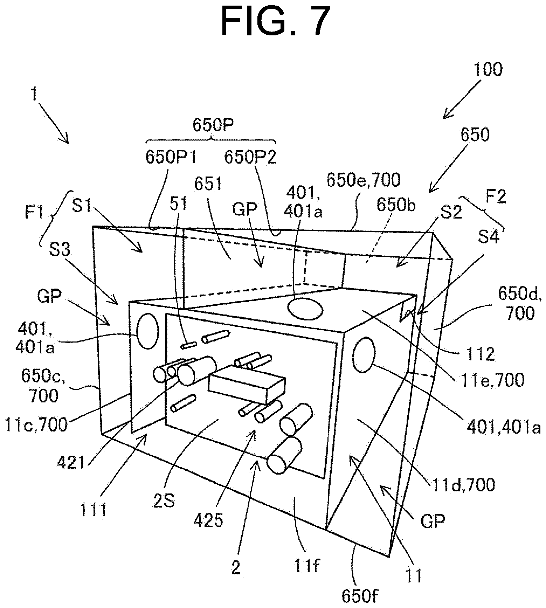

FIG. 6 is a one-point perspective view of the fuel cell system 100 of FIG. 5 as viewed obliquely from the front with the second compartment 12 omitted. FIG. 7 is a one-point perspective view schematically illustrating an internal configuration of the fuel cell system 100 of FIG. 6. As illustrated in FIG. 5 to FIG. 7, the housing 1 includes a covering body 650. The covering body 650 is configured to have a box shape and fully covers the first compartment 11. Specifically, the covering body 650 includes a covering body front wall 650a, a covering body rear wall 650b, a covering body left wall 650c, a covering body right wall 650d, a covering body top wall 650e, and a covering body bottom wall 650f. In FIG. 7, for convenience, illustration of the covering body front wall 650a of the covering body 650 and a first compartment front wall 11a is omitted.

A part of the covering body front wall 650a also serves as the first compartment front wall 11a of the first compartment 11. The covering body front wall 650a may be formed separately from the first compartment front wall 11a and may be disposed in contact with or away from the front of the first compartment front wall 11a.

A part of piping (an exhaust passage 7, an air pipe 421, and a coolant pipe 425) and wiring (a power line and a signal line) connected to the fuel cell module 2 in the first compartment 11 penetrate the first compartment front wall 11a and are drawn out to the second compartment 12. Therefore, the front surface (first compartment front wall 11a) of the first compartment 11 serves as a joint surface (joint connection part) for connecting the piping and the wiring between the first compartment 11 and the second compartment 12. Therefore, in the configuration in which the covering body front wall 650a also serves as the first compartment front wall 11a, the front surface of the covering body 650 (the covering body front wall 650a) serves as a joint surface that connects the piping and the wiring between the first compartment 11 and the second compartment 12. The above-mentioned coolant pipe 425 is a generic name of the first coolant pipe 422, the second coolant pipe 423, and the third coolant pipe 424 shown in FIG. 3. On the other hand, a hydrogen supply passage 51 and a vent passage 52, which are connected to the fuel cell module 2, are disposed to run through a ventilation flow path, and details thereof will be described later.

A part of the covering body rear wall 650b also serves as a first compartment rear wall 11b of the first compartment 11. The covering body rear wall 650b may be formed separately from the first compartment rear wall 11b and may be disposed in contact with or away from the rear of the first compartment rear wall 11b.

As shown in FIG. 7, the covering body left wall 650c is disposed to the left of a first compartment left wall 11c. The covering body left wall 650c is disposed away from the first compartment left wall 11c. The covering body right wall 650d is disposed to the right of a first compartment right wall 11d. The covering body right wall 650d is disposed away from the first compartment right wall 11d.

The covering body top wall 650e is disposed above a first compartment top wall 11e. The covering body top wall 650e is disposed away from the first compartment top wall 11e. The covering body bottom wall 650f is disposed below a first compartment bottom wall 11f constituting the bottom wall of the first compartment 11. The covering body bottom wall 650f is disposed in contact with the first compartment bottom wall 11f, but may be disposed away from the first compartment bottom wall 11f via a spacer or the like. Further, a part of the covering body bottom wall 650f may also serve as the first compartment bottom wall 11f.

By disposing the wall portions of the covering body 650 as described above, gaps GP are formed between the covering body left wall 650c and the first compartment left wall 11c, between the covering body right wall 650d and the first compartment right wall 11d, and between the covering body top wall 650e and the first compartment top wall 11e. Therefore, the covering body left wall 650c and the first compartment left wall 11c constitute a double wall portion 700 having the first compartment left wall 11c as an inner wall and the covering body left wall 650c as an outer wall. Similarly, the covering body right wall 650d and the first compartment right wall 11d constitute a double wall portion 700 having the first compartment right wall 11d as an inner wall and the covering body right wall 650d as an outer wall. The covering body top wall 650e and the first compartment top wall 11e constitute a double wall portion 700 having the first compartment top wall 11e as an inner wall and the covering body top wall 650e as an outer wall. Therefore, it can be said that the fuel cell system 100 illustrated in FIG. 5 to FIG. 7 also includes a double wall portion 700 having an inner wall and an outer wall (disposed via a gap GP) similarly to the fuel cell system 100 illustrated in FIG. 1 and the like.

As illustrated in FIG. 6, a lower end portion of the covering body front wall 650a is in contact with the covering body bottom wall 650f. On the other hand, an upper end portion of the covering body front wall 650a is not in contact with the covering body top wall 650e and is away therefrom. Therefore, a ventilation opening 650P is formed between the covering body front wall 650a and the covering body top wall 650e and between the covering body left wall 650c and the covering body right wall 650d. The ventilation opening 650P includes a ventilation inlet 650P1 and a ventilation outlet 650P2.

The ventilation inlet 650P1 and the ventilation outlet 650P2 are formed by partitioning the ventilation opening 650P in the left-right direction by a partition plate 651 described later.

### 3-2. Installation of pressure release part

The pressure release part 401 (for example, rupture plate 401a) applied to the first fuel cell system is also applicable to the second fuel cell system. For example, as illustrated in FIG. 7, the pressure release part 401 is installed on at least one of the first compartment left wall 11c, the first compartment right wall 11d, and the first compartment top wall 11e as the inner walls constituting the double wall portion 700.

Also in the second fuel cell system, by providing the pressure release part 401 on an inner wall of the double wall portion 700, even in a case where hydrogen leaks in the first compartment 11 to cause an explosion by any possibility, and the pressure in the first compartment 11 increases, when the pressure reaches a predetermined pressure, the pressure release part 401 releases the pressure to the gap GP. Consequently, the maximum pressure applied to the outer wall at the time of an explosion can be made lower than the pressure capacity of the outer wall. Accordingly, the risk of breakage of the housing 1 (in particular, the outer wall) can be reduced when an explosion occurs in the first compartment 11 by any possibility, without taking any special measures for excessively increasing the pressure capacity of the outer wall.

When an explosion occurs in the first compartment 11 by any possibility, it is desirable to suppress the blast from blowing out to the ventilation air intake port side (ventilation inlet 650P1 side). This is because no safety measures is usually adopted for the flow path on the ventilation air inlet side assuming that exhaust gas containing leaked hydrogen is discharged. Incidentally, for the flow path on the ventilation air outlet side (ventilation outlet 650P2 side), a safety measure is usually adopted assuming that exhaust gas containing leaked hydrogen is vented and discharged. From the viewpoint of suppressing the blast from blowing out toward the ventilation air intake port side, it is desirable that the inner walls of the double wall portion 700 include the first compartment right wall 11d as an exhaust side inner wall, and the pressure release part 401 be disposed on the first compartment right wall 11d. Note that the exhaust side inner wall refers to an inner wall that sandwiches at least a part of an exhaust flow path F2 with an outer wall among the inner walls of the double wall portion 700, and the first compartment right wall 11d corresponds thereto, for example. The exhaust flow path F2 indicates a right top surface side flow path S2 and a right side surface side flow path S4 described later. Incidentally, the exhaust side inner wall may include the first compartment top wall 11e (provided that a region to the right of the partition plate 651).

When the inner walls of the double wall portion 700 include the first compartment right wall 11d as the exhaust side inner wall and the first compartment left wall 11c as an intake side inner wall, the pressure release part 401 may be disposed on both the first compartment left wall 11c and the first compartment right wall 11d. Note that the intake side inner wall refers to an inner wall that sandwiches at least a part of an intake flow path F1 with an outer wall among the inner walls of the double wall portion 700, and the first compartment left wall 11c corresponds thereto, for example. The intake flow path F1 refers to a left top surface side flow path S1 and a left side surface side flow path S3 described later. The intake side inner wall may include the first compartment top wall 11e (provided that a region to the left of the partition plate 651).

With such an arrangement of the pressure release part 401, when an explosion occurs in the first compartment 11, application of a pressure equal to or higher than the pressure capacity to the outer wall is suppressed on both sides of the exhaust flow path F2 and the intake flow path F1. Consequently, the effect of reducing the risk of breakage of the housing 1 is enhanced.

Here, the operating pressure at which the pressure release part 401 disposed on the exhaust side inner wall (first compartment right wall 11d) releases pressure is defined as a first operating pressure P1 (MPaG). In addition, the operating pressure at which the pressure release part 401 disposed on the intake side inner wall (first compartment left wall 11c) releases pressure is defined as a second operating pressure P2 (MPaG). At this time, the first operating pressure P1 is desirably set to be lower than the second operating pressure P2. For example, when the design pressure capacity of the covering body left wall 650c and the covering body right wall 650d, which are outer walls, is 0.2 MPaG, the first operating pressure P1 is 0.10 MPaG, and the second operating pressure P2 is 0.15 MPaG. Note that, the first operating pressure P1 and the second operating pressure P2 both correspond to the predetermined pressure lower than the pressure capacity of the outer wall.

By setting the magnitude relationship between the first operating pressure P1 and the second operating pressure P2 as described above, when an explosion occurs in the first compartment 11 and the pressure in the first compartment 11 increases, the pressure release part 401 disposed on the exhaust side inner wall (first compartment right wall 11d) releases the pressure earlier than the pressure release part 401 disposed on the intake side inner wall (first compartment left wall 11c). Consequently, the blast can escape to the exhaust flow path F2 and be discharged to the outside in preference to the intake flow path F1. That is, the blast is prevented from being discharged toward the ventilation inlet 650P1 side.

### 3-3. Desirable position of pressure release part

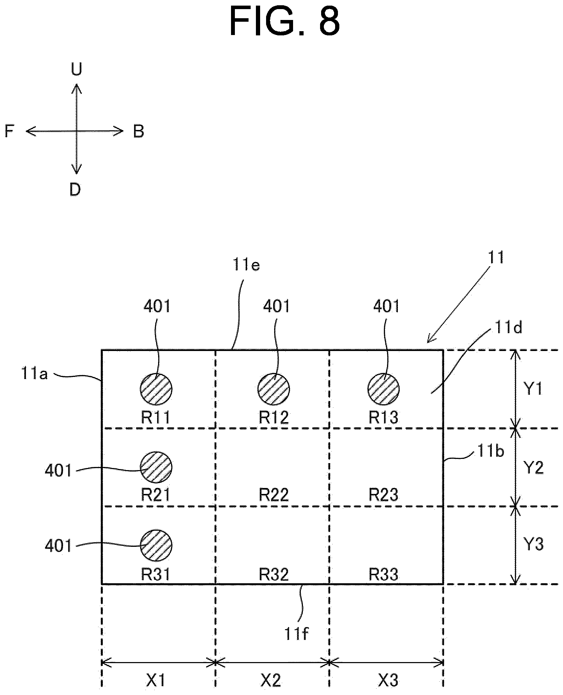

FIG. 8 is an explanatory view schematically illustrating an example of an installation position of the pressure release part 401 on the right side surface (first compartment right wall 11d) of the first compartment 11. The first compartment front wall 11a of the first compartment 11 is disposed so as to face a surface 2S of the fuel cell module 2 illustrated in FIG. 7. The hydrogen supply passage 51 and the like are connected to the surface 2S. The connection part between the fuel cell module 2 and the hydrogen supply passage 51 is a place where the risk of hydrogen leakage is high. Therefore, when an explosion occurs in the first compartment 11, it is highly likely that the explosion begins at said place. In consideration of above, from the point of efficiently operating the pressure release part 401 when an explosion occurs, the pressure release part 401 is desirably installed in a place close to a place where the risk of hydrogen leakage is high in the first compartment 11, that is, in a place close to the first compartment front wall 11a.

For example, as illustrated in FIG. 8, the pressure release part 401 is considered to be installed on the first compartment right wall 11d of the first compartment 11. When the first compartment right wall 11d is divided into a plurality of regions in the front-rear direction, the pressure release part 401 is desirably installed in a region closest to the front of the first compartment 11. The front described above refers to a side of the first compartment 11 on which the first compartment front wall 11a is disposed. In addition, considering the fact that hydrogen is light and rises when being leaked, when the first compartment right wall 11d is divided into a plurality of regions in the top-bottom direction, the pressure release part 401 is desirably installed in a region closest to the top surface of the first compartment 11.

Specifically, it is assumed that the first compartment right wall 11d is divided into a plurality of regions X1, X2, and X3 in the front-rear direction, and is divided into a plurality of regions Y1, Y2, and Y3 in the top-bottom direction. That is, it is assumed that the first compartment right wall 11d is divided into a total of nine regions arranged in 3×3. The pressure release part 401 is desirably installed in the region X1 closest to the first compartment front wall 11a. At this time, when the regions obtained by dividing the region X1 in the top-bottom direction are denoted as regions R11, R21, and R31 in order from the top, the pressure release part 401 may be disposed in at least one of the regions R11, R21, and R31.

Similarly, the pressure release part 401 is desirably installed in the region Y1 closest to the first compartment top wall 11e. At this time, when the regions obtained by dividing the region Y1 in the front-rear direction are denoted as regions R11, R12, and R13 in order from the front, the pressure release part 401 may be disposed in at least one of the regions R11, R12, and R13. Accordingly, the most desirable arrangement position of the pressure release part 401 is the region R11.

In FIG. 8, an example in which the first compartment right wall 11d is divided into nine regions, and the pressure release part 401 is installed has been described, but the number of divisions is not limited to nine. For example, the first compartment right wall 11d may be divided into m (m is an integer of 2 or more) regions in the front-rear direction and into n (n is an integer of 2 or more) regions in the top-bottom direction, and the total number of divisions may be (m×n). In this case, m may be equal to or different from n.

The number of installation locations (the number of pressure release parts 401 installed) of the pressure release part 401 may be one or two or more. Note that when it is difficult to specify the place where the risk of hydrogen leakage is high in the first compartment 11, a plurality of pressure release parts 401 is desirably installed on the first compartment right wall 11d, for example.

The same approach as in the case where the pressure release part 401 is provided on the first compartment right wall 11d can be applied also to the case where the pressure release part 401 is provided on the first compartment left wall 11c and the case where the pressure release part 401 is provided on the first compartment top wall 11e, for example. That is, when the pressure release part 401 is provided on the first compartment left wall 11c, the pressure release part 401 is desirably installed in a region closest to the first compartment front wall 11a among a plurality of regions of the first compartment left wall 11c. In addition, when the pressure release part 401 is provided on the first compartment top wall 11e, the pressure release part 401 is desirably installed in a region closest to the first compartment front wall 11a among a plurality of regions of the first compartment top wall 11e.

### 3-4. Configuration relating to ventilation flow path

The intake port 111 is provided on the first compartment left wall 11c of the first compartment 11. In the configuration of FIG. 7, a lower end portion of the first compartment left wall 11c is spaced upward from the first compartment bottom wall 11f. Consequently, a space is formed between the lower end portion of the first compartment left wall 11c and the first compartment bottom wall 11f. This space is utilized as the intake port 111. That is, the intake port 111 is positioned in the lower end portion of the first compartment left wall 11c. Note that the position of the intake port 111 is not limited to the lower end portion of the first compartment left wall 11c. That is, the intake port 111 may be provided in any position in the top-bottom direction on the first compartment left wall 11c. In addition, although an example in which the intake port 111 is provided on the first compartment left wall 11c is illustrated in FIG. 7, the intake port 111 may be provided on any inner wall as long as the inner wall constitutes the double wall portion 700. For example, the intake port 111 may be provided on the first compartment top wall 11e. As described above, the first compartment 11 as the module installation compartment has the intake port 111.

The exhaust port 112 is provided on the first compartment right wall 11d of the first compartment 11. In the configuration of FIG. 7, the exhaust port 112 is provided in an upper rear portion of the first compartment right wall 11d. Note that such a position of the exhaust port 112 is one example, and the exhaust port 112 may be provided at another position on the first compartment right wall 11d. In addition, the exhaust port 112 may be provided on any inner wall as long as the inner wall constitutes the double wall portion 700. For example, the exhaust port 112 may be provided on the first compartment top wall 11e. As described above, the first compartment 11 as the module installation compartment has the exhaust port 112.

In addition, the fuel cell system 100 includes the partition plate 651. The partition plate 651 extends between the covering body top wall 650e and the first compartment top wall 11e in the front-rear direction and disposed. Consequently, the gap GP between the covering body top wall 650e and the first compartment top wall 11e is partitioned in the left-right direction.

As a result, the left top surface side flow path S1 is formed to the left of the partition plate 651, and the right top surface side flow path S2 is formed to the right of the partition plate 651, between the covering body top wall 650e and the first compartment top wall 11e.

The left top surface side flow path S1 communicates with the left side surface side flow path S3. The left side surface side flow path S3 is formed by the gap GP between the covering body left wall 650c and the first compartment left wall 11c. In addition, the left top surface side flow path S1 communicates with the inside of a first flow path portion 801 illustrated in FIG. 5 via the ventilation inlet 650P1. The first flow path portion 801 is provided above the second compartment 12 and extends in the front-rear direction. An intake opening 801a is provided in a front end portion of the first flow path portion 801. Note that the intake opening 801a may be provided on the covering body top wall 650e.

The right top surface side flow path S2 communicates with the right side surface side flow path S4. The right side surface side flow path S4 is formed by the gap GP between the covering body right wall 650d and the first compartment right wall 11d. The right top surface side flow path S2 communicates with the inside of a second flow path portion 802 illustrated in FIG. 5 via the ventilation outlet 650P2. The second flow path portion 802 is provided above the second compartment 12 so as to be arranged on the right side of the first flow path portion 801, and extends in the front-rear direction. An exhaust opening 802a is provided in a front end portion of the second flow path portion 802. Note that the exhaust opening 802a may be provided on the covering body top wall 650e.

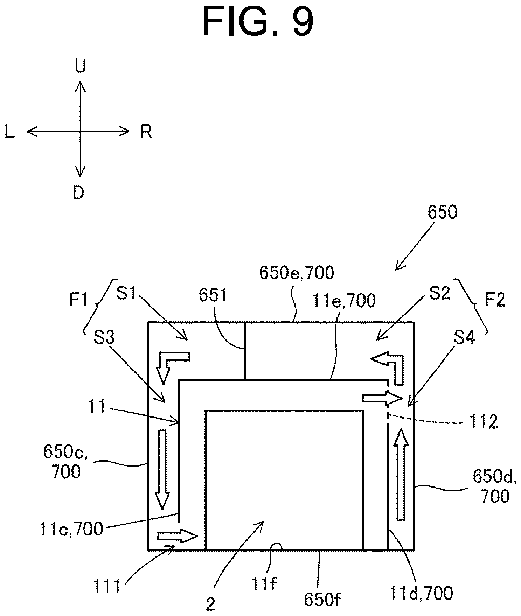

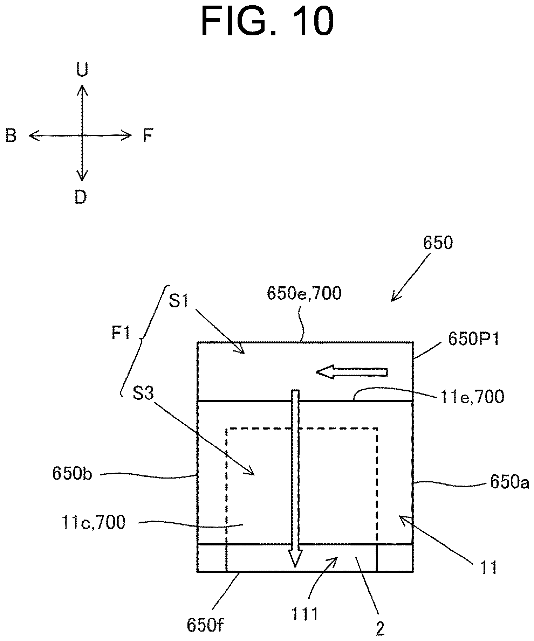

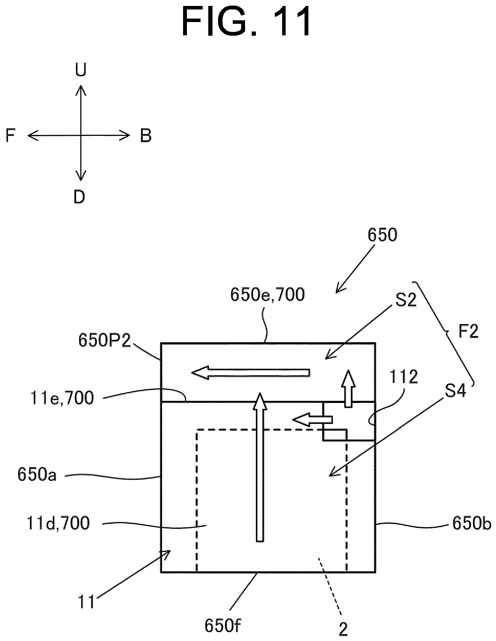

FIG. 9 schematically illustrates the ventilation air flow (intake path and exhaust path) for ventilating the inside of the first compartment 11 when the first compartment 11 is viewed from the front side. FIG. 10 schematically illustrates the intake path when the first compartment 11 is viewed from the left side surface side. FIG. 11 schematically illustrates the exhaust path when the first compartment 11 is viewed from the right side surface side. The ventilation air taken in from the outside through the intake opening 801a of FIG. 5 flows from the front side to the rear side inside the first flow path portion 801, and enters the left top surface side flow path S1 through the ventilation inlet 650P1. As illustrated in FIG. 9 and FIG. 10, the air that has entered the left top surface side flow path S1 flows into the left side surface side flow path S3, flows from the top side to the bottom side through the left side surface side flow path S3, and enters the inside of the first compartment 11 through the intake port 111. Note that in the case where the intake opening 801a is provided on the covering body top wall 650e, air taken in from the outside through the intake opening 801a directly enters the left top surface side flow path S1, flows through the same path as described above, and enters the inside of the first compartment 11.

As illustrated in FIG. 9 and FIG. 11, the fluid inside the first compartment 11 is discharged to the right side surface side flow path S4 through the exhaust port 112. The above-described fluid is, for example, air, and when hydrogen is leaked in the first compartment 11 by any possibility, the fluid also includes the leaked hydrogen. The fluid discharged to the right side surface side flow path S4 flows into the right top surface side flow path S2, and enters the inside of the second flow path portion 802 from the right top surface side flow path S2 through the ventilation outlet 650P2. The fluid flows from the rear side to the front side inside the second flow path portion 802, and is discharged to the outside from the exhaust opening 802a. The inside of the first compartment 11 is ventilated by such a flow of air (fluid). Accordingly, even when hydrogen is leaked in the first compartment 11 by any possibility, the leaked hydrogen is discharged to the outside. Note that, in the case where the exhaust opening 802a is provided on the covering body top wall 650e, the fluid that has been discharged from the inside of the first compartment 11 to the right side surface side flow path S4 and flowed into the right top surface side flow path S2 is discharged to the outside through the exhaust opening 802a.

As described above, air taken in from the outside and directed toward the intake port 111 flows through the left top surface side flow path S1 and the left side surface side flow path S3. Accordingly, the left top surface side flow path S1 and the left side surface side flow path S3, which are the gaps GP between inner walls and outer walls of the double wall portion 700, constitute the intake flow path F1. Therefore, it can be said that the intake port 111 communicates with the outside via the intake flow path F1 between the inner walls and the outer walls. As the intake port 111 communicates with the outside in this manner, ventilation air can be taken into the first compartment 11 and the inside of the first compartment 11 can be ventilated.

In addition, fluid discharged from the exhaust port 112 flows through the right top surface side flow path S2 and the right side surface side flow path S4. Accordingly, the right top surface side flow path S2 and the right side surface side flow path S4, which are the gaps GP between inner walls and outer walls of the double wall portion 700, constitute the exhaust flow path F2. Therefore, it can be said that the exhaust port 112 communicates with the outside via the exhaust flow path F2 (gaps GP) between the inner walls and the outer walls. As the exhaust port 112 communicates with the outside in this manner, the fluid can be discharged from the inside of the first compartment 11 to the outside via the exhaust flow path F2, and the inside of the first compartment 11 can be ventilated.

In addition, since the exhaust flow path F2 (gaps GP) can be utilized not only as a ventilation flow path but also as an exhaust flow path for hydrogen at the time of leakage, it is not necessary to separately provide a dedicated exhaust flow path for discharging leaked gas.

As illustrated in FIG. 7, the exhaust port 112 is disposed on the first compartment right wall 11d, and the intake port 111 is disposed on the first compartment left wall 11c. Therefore, when the first compartment 11 is viewed with the first compartment front wall 11a serving as the joint connection part as the front, it can be said that the exhaust port 112 and the intake port 111 are each disposed on an inner wall located on a surface other than the front of the first compartment 11. Various pipes and wires connected to the fuel cell module 2 are disposed so as to penetrate the first compartment front wall 11a serving as the joint connection part.

Therefore, a design in which a place for the ventilation flow path (the intake flow path and the exhaust flow path) is secured in the vicinity of the first compartment front wall 11a is difficult. That is, from the point of easily securing a place for the ventilation flow path, the exhaust port 112 and the intake port 111 are desirably disposed on an inner wall other than the first compartment front wall 11a.

As described above, the hydrogen supply passage 51 is connected to the surface 2S of the fuel cell module 2 facing the first compartment front wall 11a. Accordingly, when the first compartment 11 is viewed from the front side with the surface 2S of the fuel cell module 2 to which the hydrogen supply passage 51 is connected as the front, it can be also said that the exhaust port 112 and the intake port 111 are desirably disposed on the inner wall.

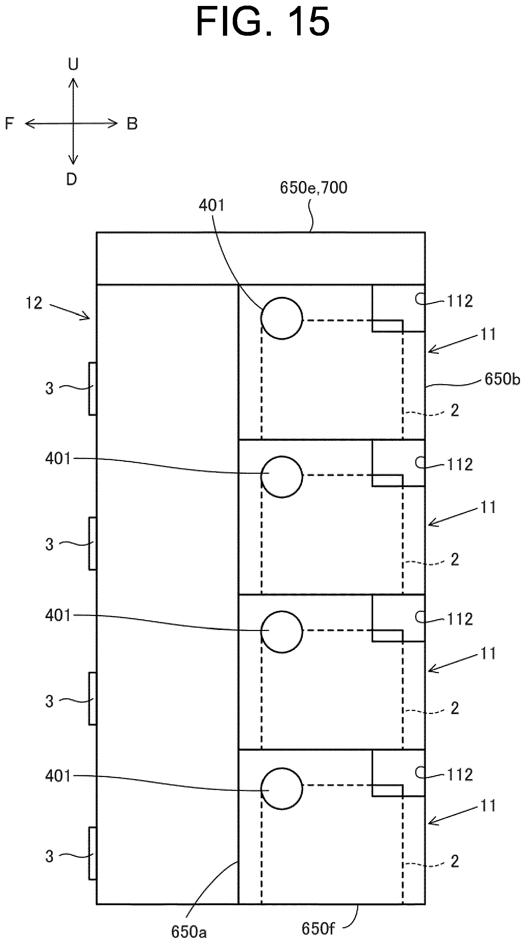

As described above, the exhaust port 112 and the intake port 111 may be provided on the first compartment top wall 11e of the first compartment 11. In a layout having only one first compartment 11, such an arrangement of the exhaust port 112 and the intake port 111 is possible. Note that in a case where a layout in which multiple first compartments 11 are stacked as described later is realized (see FIG. 15), for example, when the exhaust port 112 and the intake port 111 are provided on the first compartment top wall 11e of the first compartment 11 in a lower stage, the exhaust port 112 and the intake port 111 may be blocked by the first compartment bottom wall 11f of the first compartment 11 of an upper stage. Therefore, in the case of multi-stage stacking, for example, it is necessary to take an ingenuity, for example, to change the arrangement of the exhaust port 112 and the intake port 111 of the first compartment 11 of the lower stage so as to be disposed on an inner wall other than the first compartment top wall 11e.

In consideration of the above, from the viewpoint of easily achieving the layout of the multi-stage stacking of the first compartment 11, the exhaust port 112 and the intake port 111 are desirably disposed on the inner walls (the first compartment right wall 11d and the first compartment left wall 11c) located on the left and right side surfaces of the first compartment 11, respectively.

As illustrated in FIG. 6, FIG. 7, and FIG. 9, the ventilation outlet 650P2 communicates with the exhaust port 112 via the exhaust flow path F2 (the right side surface side flow path S4 and the right top surface side flow path S2). In addition, the ventilation inlet 650P1 communicates with the intake port 111 via the intake flow path F1 (the left side surface side flow path S3 and the left top surface side flow path S1). The second fuel cell system includes the ventilation outlet 650P2 and the ventilation inlet 650P1 described above. Here, the opening area of the ventilation outlet 650P2 is defined as a first opening area A1 (cm²), and the opening area of the ventilation inlet 650P1 is defined as a second opening area A2 (cm²). In this case, the first opening area A1 is desirably larger than the second opening area A2.

The cross-sectional area of each of the exhaust flow path F2 and the intake flow path F1 is assumed to be constant in the flow path direction. By setting A1 > A2, the pressure loss of the exhaust flow path F2 can be made smaller than the pressure loss of the intake flow path F1. Consequently, when an explosion occurs in the first compartment 11, the blast more easily flows in the exhaust flow path F2 than in the intake flow path F1. Therefore, it is possible to reduce the risk of a decrease in safety due to blast emission to the ventilation air intake port side (ventilation inlet 650P1 side). In practice, it is considered that the cross-sectional area of each of the exhaust flow path F2 and the intake flow path F1 changes in the flow path direction. However, even in this case, the effect of preventing a back-flow of the blast to the intake flow path F1 is greatly expected by setting the opening area.

As illustrated in FIG. 7, the first compartment 11 has, on the left and right side surfaces, the first compartment left wall 11c and the first compartment right wall 11d as inner walls of the double wall portion 700. In addition, the first compartment 11 has, on the top surface, the first compartment top wall 11e as an inner wall of the double wall portion 700. That is, the inner walls of the double wall portion 700 are located on the left and right side surfaces and the top surface of the first compartment 11.

The covering body left wall 650c and the covering body right wall 650d as outer walls of the double wall portion 700 are disposed along the first compartment left wall 11c and the first compartment right wall 11d, respectively. In addition, the covering body top wall 650e as an outer wall of the double wall portion 700 is disposed along the first compartment top wall 11e. That is, the outer walls of the double wall portion 700 are disposed along the side surface and the top surface of the first compartment 11.

In addition, as illustrated in FIG. 9 to FIG. 11, the left side surface side flow path S3 and the left top surface side flow path S1 communicate between the first compartment left wall 11c and first compartment top wall 11e and the covering body left wall 650c and covering body top wall 650e. That is, the left side surface side flow path S3 and the left top surface side flow path S1 communicate between inner walls and outer walls of the double wall portion 700. Similarly, the right side surface side flow path S4 and the right top surface side flow path S2 communicate between the first compartment right wall 11d and first compartment top wall 11e and the covering body right wall 650d and covering body top wall 650e. That is, the right side surface side flow path S4 and the right top surface side flow path S2 communicate between inner walls and outer walls of the double wall portion 700.

As described above, the side surface side flow path (the left side surface side flow path S3 or the right side surface side flow path S4) along a side surface of the first compartment 11 and the top surface side flow path (the left top surface side flow path S1 or the right top surface side flow path S2) along the top surface of the first compartment 11 communicate between inner walls and outer walls of the double wall portion 700. In this configuration, the gaps GP between the outer walls and the inner walls of the double wall portion 700, which are the lateral and upper spaces of the first compartment 11, can be utilized as a flow path through which a ventilation fluid flows.

As illustrated in FIG. 5 and FIG. 7, the partition plate 651 is disposed between the first compartment top wall 11e as an inner wall and the covering body top wall 650e as an outer wall. The partition plate 651 separates the intake flow path F1 (particularly, the left top surface side flow path S1) and the exhaust flow path F2 (particularly, the right top surface side flow path S2).

By disposing the partition plate 651 in this manner, the fluid (for example, air) flowing through the intake flow path F1 and the fluid (for example, air or leaked gas) flowing through the exhaust flow path F2 are not mixed between the first compartment top wall 11e and the covering body top wall 650e. Consequently, the fluid flowing through the intake flow path F1 is reliably guided into the first compartment 11 through the intake port 111, and the fluid discharged from the inside of the first compartment 11 through the exhaust port 112 is reliably discharged to the outside via the exhaust flow path F2. In addition, even when hydrogen is leaked from the inside of the first compartment 11, the possibility that the leaked gas flowing through the exhaust flow path F2 enters the intake flow path F1 is eliminated by disposing the partition plate 651. Therefore, the possibility that the leaked gas returns into the first compartment 11 via the intake flow path F1 is also eliminated.

### 3-5. Arrangement of hydrogen supply passage and vent passage

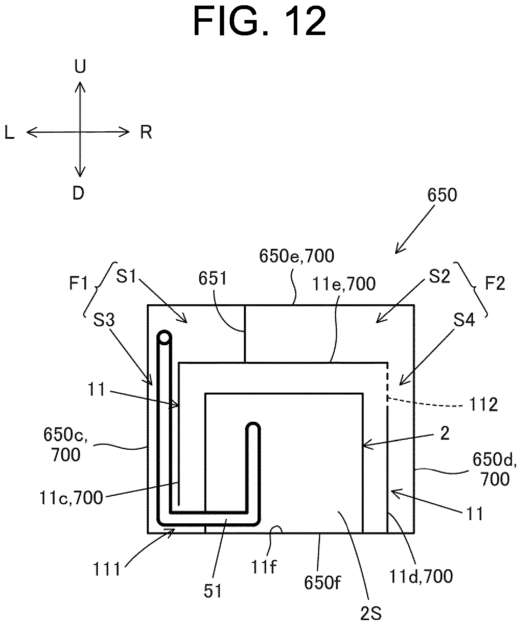

FIG. 12 shows an arrangement of the hydrogen supply passage 51 as viewed from the front side of the first compartment 11. The fuel cell system 100 includes the hydrogen supply passage 51 as fuel gas supply piping. The hydrogen supply passage 51 is connected to the fuel cell module 2 inside the first compartment 11 on the surface 2S.

In the fuel cell system 100, the hydrogen supply passage 51 is disposed as follows, for example. That is, the hydrogen supply passage 51 passes through the intake opening 801a in FIG. 5, extends inside the first flow path portion 801 from the front to the rear, and enters the left top surface side flow path S1. The hydrogen supply passage 51 then bends downward from the left top surface side flow path S1, enters the left side surface side flow path S3, turns right, passes through the intake port 111, and enters the first compartment 11. The hydrogen supply passage 51 bends upward inside the first compartment 11, bends backward thereafter, and is connected to the fuel cell module 2.

In this manner, the hydrogen supply passage 51 is disposed so as to run through the left top surface side flow path S1 and the left side surface side flow path S3. That is, the hydrogen supply passage 51 runs through the intake flow path F1. In other words, the hydrogen supply passage 51 runs between the inner walls and the outer walls sandwiching the intake flow path F1 in the double wall portion 700. According to the hydrogen supply passage 51 disposed in this manner, even when hydrogen is leaked from the hydrogen supply passage 51 by any possibility, the leaked hydrogen is mixed with the ventilation fluid (for example, air) flowing through the intake flow path F1 to be diluted, and can be then discharged to the outside via the exhaust flow path F2.

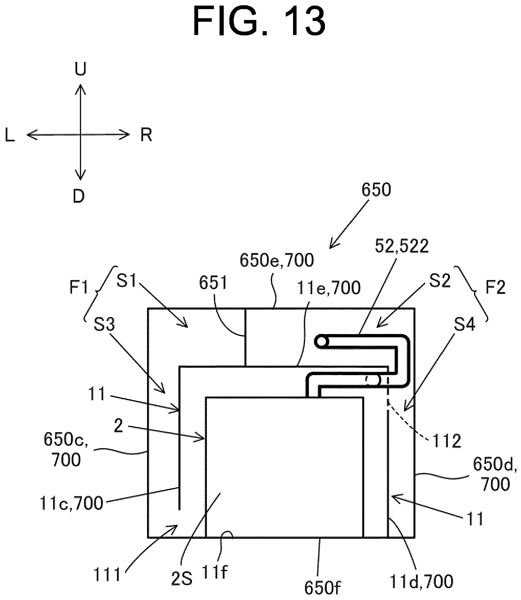

FIG. 13 illustrates an arrangement of the vent passage 52 as viewed from the front side of the first compartment 11.

The fuel cell system 100 includes the vent passage 52 as fuel gas vent piping.

In the fuel cell system 100, the vent passage 52 is disposed as follows, for example. That is, the vent passage 52 extends upward from an upper portion of the fuel cell module 2 and is directed to the right. The vent passage 52 is then extends in the space on the right side of the fuel cell module 2 from the front to the rear, enters the right side surface side flow path S4 through the exhaust port 112 provided on the first compartment right wall 11d of the first compartment 11, further extends upward, and enters the right top surface side flow path S2. The vent passage 52 runs through the right top surface side flow path S2, extends inside the second flow path portion 802 illustrated in FIG. 5 toward the front, and is taken out to the outside through the exhaust opening 802a.

In this manner, the vent passage 52 is disposed so as to run the right top surface side flow path S2 and the right side surface side flow path S4. That is, the vent passage 52 runs through the exhaust flow path F2. In other words, the vent passage 52 runs between the inner walls and the outer walls sandwiching the exhaust flow path F2 in the double wall portion 700. According to the vent passage 52 arranged in this manner, even when hydrogen is leaked from the vent passage 52 by any possibility, the leaked hydrogen is mixed with the ventilation fluid (for example, air) flowing through the exhaust flow path F2 to be diluted, and can be discharged.

### 4. Still another configuration of fuel cell system

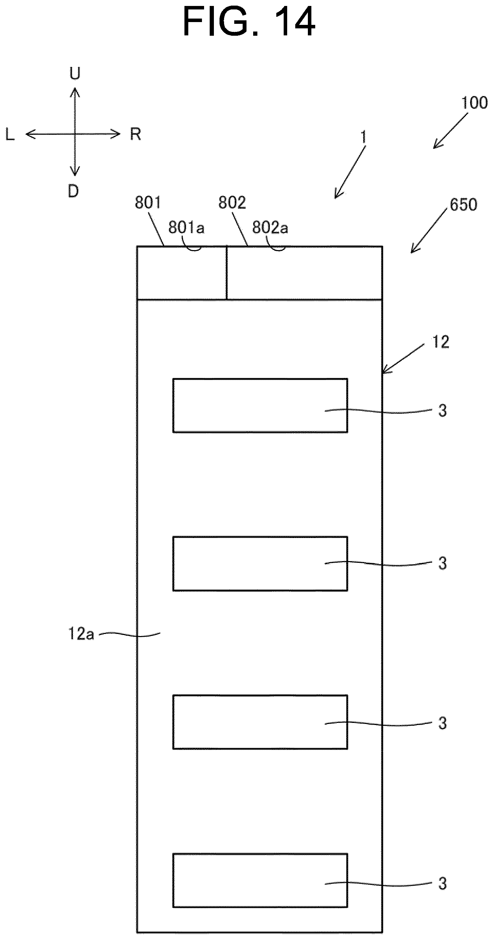

FIG. 14 is a front view illustrating a still another configuration of a fuel cell system 100. FIG. 15 is a right side view of the fuel cell system 100 of FIG. 14. Provided that in FIG. 15, for convenience, illustration of the right side surface (outer wall) of the housing 1 is omitted. The fuel cell system 100 illustrated in FIG. 14 and the like is also referred to as a third fuel cell system. The third fuel cell system is different from the second fuel cell system having only one first compartment 11 and is also different from the first fuel cell system in which multiple fuel cell modules 2 are disposed side by side in that multiple first compartments 11 each housing the fuel cell module 2 are stacked (multi-stage stacking) in the top-bottom direction.

The fuel cell system 100 as the third fuel cell system will be described in detail below. For convenience of description, in the third fuel cell system, members having the same functions as those of the first fuel cell system and the second fuel cell system are denoted by the same reference numerals.

In addition, as the third fuel cell system, a configuration in which four first compartments 11 are stacked will be described here, but the number of the first compartments 11 is not limited to four and may be two or more.

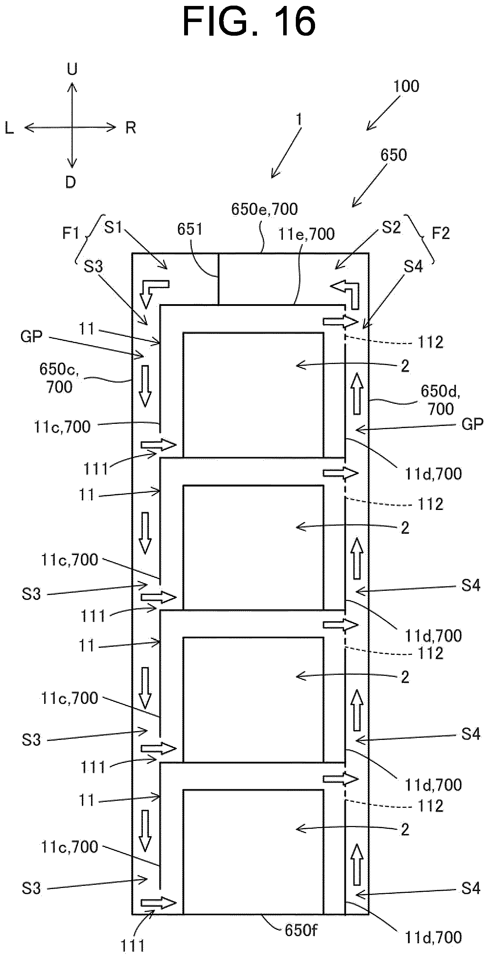

FIG. 16 is a front view schematically illustrating the configuration of the fuel cell system 100 illustrated in FIG. 14 and FIG. 15 as viewed from the front with the second compartment 12 omitted. A housing 1 of the fuel cell system 100 has multiple first compartments 11 as the module installation compartment. The multiple first compartments 11 are disposed side by side in the top-bottom direction.

A first compartment left wall 11c of each first compartment 11 is covered by a covering body left wall 650c via a gap GP. Accordingly, each first compartment left wall 11c and the covering body left wall 650c constitute a double wall structure, that is, a double wall portion 700 in which each first compartment left wall 11c is an inner wall and the covering body left wall 650c is an outer wall. In addition, a first compartment right wall 11d of each first compartment 11 is covered by a covering body right wall 650d via a gap GP. Accordingly, each first compartment right wall 11d and the covering body right wall 650d constitute a double wall structure, that is, a double wall portion 700 in which each first compartment right wall 11d is an inner wall and the covering body right wall 650d is an outer wall.

In this configuration, as illustrated in FIG. 16, the gap GP between each first compartment left wall 11c and the covering body left wall 650c communicates in the top-bottom direction. That is, a left side surface side flow path S3 between the first compartment left walls 11c and the covering body left wall 650c communicates in the top-bottom direction. Consequently, a ventilation fluid that has passed through a left top surface side flow path S1 can be supplied to an intake port 111 of each first compartment 11 via the left side surface side flow path S3.

The gap GP between each first compartment right wall 11d and the covering body right wall 650d also communicates in the top-bottom direction. That is, a right side surface side flow path S4 between the first compartment right walls 11d and the covering body right wall 650d communicates in the top-bottom direction. Consequently, the ventilation fluid discharged from an exhaust port 112 of each first compartment 11 can be guided to a second flow path portion 802 (see FIG. 14) via the right side surface side flow path S4 and a right top surface side flow path S2, and discharged to the outside.

The pressure release part 401 described above is disposed on the first compartment right wall 11d of each first compartment 11 as illustrated in FIG. 15. In this case, it can be said that the multiple first compartments 11 each have, on the side surface thereof, an inner wall (first compartment right wall 11d) on which the pressure release part 401 is disposed. As described above, the first compartment right wall 11d of each first compartment 11 is covered with the covering body right wall 650d which is an outer wall of the double wall portion 700. Accordingly, it can be said that the outer wall (covering body right wall 650d) of the housing 1 is disposed so as to cover the side surfaces (especially, the right side surfaces) of the multiple first compartments 11 via the gap GP.

In this manner, in the fuel cell system 100 in which multiple first compartments 11 are vertically stacked, the outer wall (covering body right wall 650d) covers the side surface (first compartment right wall 11d) of the first compartment 11 on which the pressure release part 401 is disposed. Therefore, even when the pressure increases due to an explosion inside any of the multiple first compartments 11, the risk of application of a pressure equal to or higher than the pressure capacity to the outer wall can be reduced by pressure release of the pressure release part 401 provided to each first compartment 11. As a result, the risk of breakage of the housing 1 caused by a potential explosion inside a first compartment 11 can be reduced also in the fuel cell system 100 in which multiple first compartments 11 are vertically stacked.

### 5. Still another configuration of fuel cell system

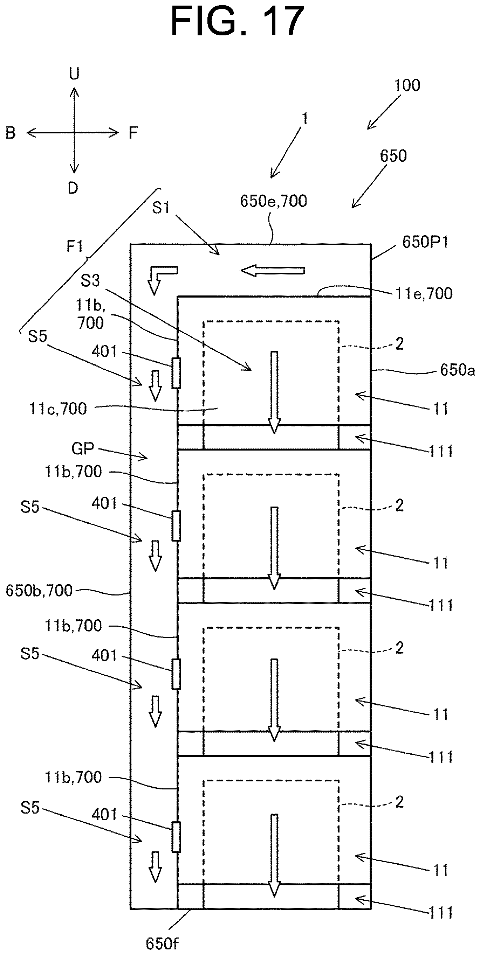

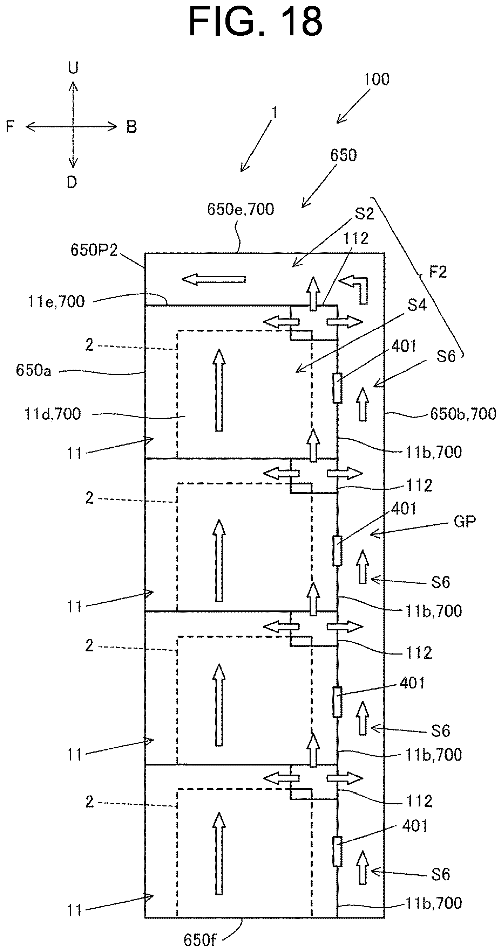

FIG. 17 is a left side view illustrating a still another configuration of a fuel cell system 100. FIG. 18 is a right side view of the fuel cell system 100. Provided that in FIG. 17, illustration of a covering body left wall 650c is omitted for convenience for the purpose of illustrating an internal configuration of the fuel cell system 100.

Further, in FIG. 18, illustration of a covering body right wall 650d is omitted for convenience for the purpose of illustrating the internal configuration of the fuel cell system 100.

The fuel cell system 100 illustrated in FIG. 17 and FIG. 18 is also referred to as a fourth fuel cell system. The fourth fuel cell system has a configuration in which a first compartment rear wall 11b of each first compartment 11 is covered with a covering body rear wall 650b via a gap GP in the fuel cell system 100 (third fuel cell system) illustrated in FIG. 14 to FIG. 16. In this case, each first compartment rear wall 11b and the covering body rear wall 650b constitute a double wall structure, that is, a double wall portion 700 in which each first compartment rear wall 11b is an inner wall and the covering body rear wall 650b is an outer wall.

In this configuration, a pressure release part 401 can be provided on each first compartment rear wall 11b to be an inner wall. Consequently, breakage of the outer wall (for example, the covering body rear wall 650b) can be suppressed even when an explosion occurs in the first compartment 11 by any possibility.

A partition plate 651 may extend, in the top-bottom direction, to be disposed not only between a covering body top wall 650e and a first compartment top wall 11e but also between each first compartment rear wall 11b and the covering body rear wall 650b. In this case, the gap GP between each first compartment rear wall 11b and the covering body rear wall 650b is partitioned in the left-right direction by the partition plate 651. Then, the gap GP between each first compartment rear wall 11b and the covering body rear wall 650b communicates in the top-bottom direction. As a result, a left rear surface side flow path S5 is formed to the left of the partition plate 651, and a right rear surface side flow path S6 is formed to the right of the partition plate 651, between each first compartment rear wall 11b and the covering body rear wall 650b. Then, a left top surface side flow path S1 communicates with the left rear surface side flow path S5, and the right rear surface side flow path S6 communicates with a right top surface side flow path S2.

Accordingly, as illustrated in FIG. 17, air taken in from the outside and flowing through the left top surface side flow path S1 passes through not only the left side surface side flow path S3 but also the left rear surface side flow path S5 and is guided to the intake port 111 of each first compartment 11. In addition, as illustrated in FIG. 18, a fluid discharged from an exhaust port 112 of each first compartment 11 flows not only through a right side surface side flow path S4 but also through the right rear surface side flow path S6 to the right top surface side flow path S2 and is discharged to the outside. In this manner, the gap GP between each first compartment rear wall 11b and the covering body rear wall 650b is utilized as a flow path through which a ventilation fluid flows.

Note that the configuration of the fourth fuel cell system in which the first compartment rear wall 11b of the first compartment 11 is covered with the covering body rear wall 650b via the gap GP can be applied to the second fuel cell system illustrated in FIG. 5 to FIG. 13.

### 6. Supplemental

The fuel cell system 100 (first to fourth fuel cell systems) described above can be mounted on, for example, a ship. In this case, it is possible to realize a fuel cell ship in which a propulsion device is driven by electric power extracted by the fuel cell system.

### 7. Supplementary note

The fuel cell system described in the present embodiment can be expressed as follows.

A fuel cell system according to supplementary note (1) is
a fuel cell system including a housing having a module installation compartment in which a fuel cell module is installed, the fuel cell system further including
a double wall portion with an inner wall and an outer wall, in which
the housing has the outer wall,
the module installation compartment has the inner wall,
the inner wall has a pressure release part, and
when a pressure in the module installation compartment reaches a predetermined pressure lower than a pressure capacity of the outer wall, the pressure release part releases the pressure.

A fuel cell system according to supplementary note (2) is
the fuel cell system according to supplementary note (1), in which
(the inner wall of) the module installation compartment has an exhaust port, and
the exhaust port communicates with the outside via a gap between the inner wall and the outer wall.

A fuel cell system according to supplementary note (3) is
the fuel cell system according to supplementary note (2), further including fuel gas supply piping connected to the fuel cell module in the module installation compartment, in which
the fuel gas supply piping runs between the inner wall and the outer wall in the double wall portion.

A fuel cell system according to supplementary note (4) is
the fuel cell system according to supplementary note (3), further including fuel gas vent piping connected to the fuel cell module in the module installation compartment, in which
the fuel gas vent piping runs between the inner wall and the outer wall in the double wall portion.

A fuel cell system according to supplementary note (5) is
the fuel cell system according to supplementary note (4), in which
(the inner wall of) the module installation compartment has an intake port, and
the intake port communicates with the outside via an intake flow path between the inner wall and the outer wall.

A fuel cell system according to supplementary note (6) is
the fuel cell system according to supplementary note (5), in which
the exhaust port communicates with the outside via an exhaust flow path between the inner wall and the outer wall.

A fuel cell system according to supplementary note (7) is
the fuel cell system according to supplementary note (6), in which
when the module installation compartment is viewed from a front side, with a surface of the fuel cell module to which the fuel gas supply piping is connected, as a front,
the exhaust port and the intake port are disposed on the inner wall located on a surface other than the front of the module installation compartment.

A fuel cell system according to supplementary note (8) is
the fuel cell system according to supplementary note (7), in which the exhaust port and the intake port are disposed on the inner wall located on left and right side surfaces of the module installation compartment, respectively.

A fuel cell system according to supplementary note (9) is
the fuel cell system according to any of supplementary notes (6) to (8), further including
a ventilation outlet communicating with the exhaust port via the exhaust flow path, and
a ventilation inlet communicating with the intake port via the intake flow path, in which
an opening area of the ventilation outlet is larger than an opening area of the ventilation inlet.

A fuel cell system according to supplementary note (10) is
the fuel cell system according to any of supplementary notes (6) to (9), in which
the inner wall includes an exhaust side inner wall sandwiching the exhaust flow path with the outer wall, and
the pressure release part is disposed on the exhaust side inner wall.

A fuel cell system according to supplementary note (11) is
the fuel cell system according to supplementary note (10), in which
the inner wall further includes an intake side inner wall sandwiching the intake flow path with the outer wall, and
the pressure release part is disposed on the exhaust side inner wall and the intake side inner wall.

A fuel cell system according to supplementary note (12) is
the fuel cell system according to supplementary note (11), in which
an operating pressure when the pressure release part disposed on the exhaust side inner wall releases pressure is set to be lower than an operating pressure when the pressure release part disposed on the intake side inner wall releases pressure.

A fuel cell system according to supplementary note (13) is
the fuel cell system according to supplementary note (8), in which
the inner wall of the double wall portion is located on left and right side surfaces and a top surface of the module installation compartment;
the outer wall is disposed along the side surfaces and the top surface of the module installation compartment; and
a side surface side flow path along the side surfaces of the module installation compartment and a top surface side flow path along the top surface communicate between the inner wall and the outer wall.

A fuel cell system according to supplementary note (14) is
the fuel cell system according to supplementary note (13), further including a partition plate disposed between the inner wall and the outer wall and separating the intake flow path and the exhaust flow path.

A fuel cell system according to supplementary note (15) is
the fuel cell system according to supplementary note (13) or (14), in which the housing has multiple module installation compartments;
each of the multiple module installation compartments has, on a side surface thereof, the inner wall on which the pressure release part is disposed, and the multiple module installation compartments are disposed side by side in a top-bottom direction; and
the outer wall of the housing is disposed so as to cover side surfaces of the multiple module installation compartments.

A fuel cell system according to supplementary note (16) is
the fuel cell system according to supplementary note (14), in which the partition plate is disposed on a top surface (first compartment top wall) of the module installation compartment with a gap therebetween.

A fuel cell system according to supplementary note (17) is
the fuel cell system according to any of supplementary notes (1) to (14), in which
the pressure release part is disposed on a top surface (first compartment top wall) of the module installation compartment.

A fuel cell system according to supplementary note (18) is
the fuel cell system according to any of supplementary notes (1) to (17), in which
among surfaces of the module installation compartment, when a connection surface (first compartment front wall) through which piping connected to the fuel cell module penetrates is taken as a front surface, the inner wall with the pressure release part is located on a side surface (at least one of a first compartment left wall and a first compartment right wall) other than the front surface of the module installation compartment, and
when the side surface is divided into a plurality of regions in the front-rear direction, the pressure release part is disposed in a region in the side surface closest to the front surface.

A fuel cell system according to supplementary note (19) is
the fuel cell system according to supplementary note (18), in which
when the side surface is divided into a plurality of regions in the top-bottom direction, the pressure release part is disposed in an uppermost region in the side surface.

A fuel cell system according to supplementary note (20) is
the fuel cell system according to any of supplementary notes (1) to (19), in which
the pressure release part includes a rupture plate, and
the rupture plate ruptures when a pressure in the module installation compartment reaches a predetermined pressure, thereby releasing the pressure.

A fuel cell system according to supplementary note (21) is
the fuel cell system according to supplementary note (5), in which
the fuel gas supply piping runs through the intake flow path.

A fuel cell system according to supplementary note (22) is
the fuel cell system according to supplementary note (6), in which
the fuel gas vent piping runs through the exhaust flow path.

A fuel cell system according to supplementary note (23) is
the fuel cell system according to supplementary note (15), in which
the outer wall (covering body rear wall) of the housing is disposed to further cover a rear surface (first compartment rear wall) of the multiple module installation compartments via a gap.

A fuel cell system according to supplementary note (24) is
the fuel cell system according to supplementary note (23), in which
the pressure release part is further disposed on the rear surface of the module installation compartment.

A fuel cell system according to supplementary note (25) is
the fuel cell system according to supplementary note (23) or (24), in which
an air flow path (an intake flow path and an exhaust flow path) is provided between the outer wall (covering body rear wall) of the housing and the rear surface (first compartment rear wall) of the module installation compartment.

A fuel cell system according to supplementary note (26) is
the fuel cell system according to supplementary note (25), in which
a top surface side flow path (a left top surface side flow path or a right top surface side flow path) along the top surface of the module installation compartment and a rear surface side flow path (a left rear surface side flow path or a right rear surface side flow path) along the rear surface of the module installation compartment communicate between the inner wall and the outer wall.

Although the embodiments of the present invention have been described above, the scope of the present invention is not limited thereto, and can be extended or modified and carried out without departing from the spirit of the invention.

### INDUSTRIAL APPLICABILITY

The fuel cell system of the present invention can be used, for example, for generating electric power in a ship.

### REFERENCE SIGNS LIST

1 Housing
2 Fuel cell module
2S Surface
11 First compartment (module installation compartment)
11b First compartment rear wall (inner wall)
11c First compartment left wall (inner wall, intake side inner wall)
11d First compartment right wall (inner wall, exhaust side inner wall)
11e First compartment top wall (inner wall)
51 Hydrogen supply passage (fuel gas supply piping)
52 Vent passage (fuel gas vent piping)
100 Fuel cell system
111 Intake port
112 Exhaust port
401 Pressure release part
500 Control device
600e Lid body top wall (outer wall)
650P1 Ventilation inlet
650P2 Ventilation outlet
650b Covering body rear wall (outer wall)
650c Covering body left wall (outer wall)
650d Covering body right wall (outer wall)
650e Covering body top wall (outer wall)
651 Partition plate
700 Double wall portion
F1 Intake flow path
F2 Exhaust flow path
GP Gap
P1 First operating pressure
P2 Second operating pressure
A1 First opening area
A2 Second opening area
S1 Left top surface side flow path (intake flow path)
S2 Right top surface side flow path (exhaust flow path)
S3 Left side surface side flow path (intake flow path)
S4 Right side surface side flow path (exhaust flow path)
S5 Left rear surface side flow path (intake flow path)
S6 Right rear surface side flow path (exhaust flow path)

## Claims

1. A fuel cell system, comprising
a housing having a module installation compartment in which a fuel cell module is installed, the fuel cell system further comprising
a double wall portion with an inner wall and an outer wall,
wherein
the housing has the outer wall,
the module installation compartment has the inner wall,
the inner wall has a pressure release part, and
when a pressure in the module installation compartment reaches a predetermined pressure lower than a pressure capacity of the outer wall, the pressure release part releases the pressure.

2. The fuel cell system according to claim 1, wherein
the module installation compartment has an exhaust port, and
the exhaust port communicates with an outside via a gap between the inner wall and the outer wall.

3. The fuel cell system according to claim 2, further comprising
fuel gas supply piping connected to the fuel cell module in the module installation compartment, wherein
the fuel gas supply piping runs between the inner wall and the outer wall in the double wall portion.

4. The fuel cell system according to claim 3, further comprising
fuel gas vent piping connected to the fuel cell module in the module installation compartment, wherein
the fuel gas vent piping runs between the inner wall and the outer wall in the double wall portion.

5. The fuel cell system according to claim 4, wherein
the module installation compartment has an intake port, and
the intake port communicates with the outside via an intake flow path between the inner wall and the outer wall.

6. The fuel cell system according to claim 5, wherein
the exhaust port communicates with the outside via an exhaust flow path between the inner wall and the outer wall.

7. The fuel cell system according to claim 6, wherein
when the module installation compartment is viewed from a front side, with a surface of the fuel cell module to which the fuel gas supply piping is connected, as a front,
the exhaust port and the intake port are disposed on the inner wall located on a surface other than the front of the module installation compartment.

8. The fuel cell system according to claim 7, wherein
the exhaust port and the intake port are disposed on the inner wall located on left and right side surfaces of the module installation compartment, respectively.

9. The fuel cell system according to claim 6, further comprising
a ventilation outlet communicating with the exhaust port via the exhaust flow path, and
a ventilation inlet communicating with the intake port via the intake flow path, wherein
an opening area of the ventilation outlet is larger than an opening area of the ventilation inlet.

10. The fuel cell system according to claim 6, wherein
the inner wall includes an exhaust side inner wall sandwiching the exhaust flow path with the outer wall, and
the pressure release part is disposed on the exhaust side inner wall.

11. The fuel cell system according to claim 10, wherein
the inner wall further includes an intake side inner wall sandwiching the intake flow path with the outer wall, and
the pressure release part is disposed on the exhaust side inner wall and the intake side inner wall.

12. The fuel cell system according to claim 11, wherein
an operating pressure when the pressure release part disposed on the exhaust side inner wall releases pressure is set to be lower than an operating pressure when the pressure release part disposed on the intake side inner wall releases pressure.

13. The fuel cell system according to claim 8, wherein
the inner wall of the double wall portion is located on left and right side surfaces and a top surface of the module installation compartment;
the outer wall is disposed along the side surfaces and the top surface of the module installation compartment; and
a side surface side flow path along the side surfaces of the module installation compartment and a top surface side flow path along the top surface communicate between the inner wall and the outer wall.

14. The fuel cell system according to claim 13, further comprising
a partition plate disposed between the inner wall and the outer wall and separating the intake flow path and the exhaust flow path.

15. The fuel cell system according to claim 13, wherein
the housing has multiple module installation compartments, including the module installation compartment;
each of the multiple module installation compartments has, on a side surface thereof, the inner wall on which the pressure release part is disposed, and the multiple module installation compartments are disposed side by side in a top-bottom direction; and
the outer wall of the housing is disposed so as to cover the side surfaces of the multiple module installation compartments with a gap therebetween.
